(19) 

Europäisches
Patentamt
European
Patent Office
Office européen
des brevets

(11) **EP 4 443 985 A1**

(12) # EUROPEAN PATENT APPLICATION
published in accordance with Art. 153(4) EPC

(43) Date of publication:
**09.10.2024 Bulletin 2024/41**

(21) Application number: **22914345.8**

(22) Date of filing: **19.12.2022**

(51) International Patent Classification (IPC):
***H04W 52/02*** *(2009.01)*

(52) Cooperative Patent Classification (CPC):
**H04W 52/02; H04W 72/0446; H04W 72/0453;
H04W 72/1273**

(86) International application number:
**PCT/CN2022/139869**

(87) International publication number:
**WO 2023/125091 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2021 CN 202111667040**

(71) Applicant: **Huawei Technologies Co., Ltd.
Shenzhen, Guangdong 518129 (CN)**

(72) Inventors:
• **LI, Ruijie
Shenzhen, Guangdong 518129 (CN)**
• **GUAN, Lei
Shenzhen, Guangdong 518129 (CN)**
• **LI, Shengyu
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND APPARATUS**

(57) Embodiments of this application provide a communication method and apparatus. The method includes: A network device generates a plurality of pieces of first information, where the first information includes at least one of a synchronization signal or system information; and the network device sends the plurality of pieces of first information to a terminal device on a same time domain resource and a plurality of frequency domain resources. Correspondingly, the terminal device receives one or more pieces of first information. According to embodiments of this application, time domain overheads for sending the synchronization signal and/or the system information by the network device can be reduced, and sending power consumption of the network device can be reduced, to facilitate energy saving of the network device.

```
Network device                         Terminal device

      │ S401: Send N pieces of first information on a        │
      │ same time domain resource and N frequency           │
      │ domain resources                                    │
      │ ──────────────────────────────────────────────────▶│
      │                                                     │
      │                      ┌──────────────────────────────┴──┐
      │                      │ S402: Receive one or more pieces │
      │                      │ of first information             │
      │                      └──────────────────────────────┬──┘
      │ S403: Send a random access channel RACH             │
      │ ◀──────────────────────────────────────────────────│
  ┌───┴──────────────────────────┐                          │
  │ S404: Receive the random      │                          │
  │ access channel RACH           │                          │
  └───┬──────────────────────────┘                          │
      │                                                     │
```

FIG. 4

EP 4 443 985 A1

## Description

This application claims priority to Chinese Patent Application No. 202111667040.8, filed with the China National Intellectual Property Administration on December 30, 2021 and entitled "COMMUNICATION METHOD AND APPARATUS", which is incorporated herein by reference in its entirety.

## TECHNICAL FIELD

This application relates to the field of communication technologies, and in particular, to a communication method and apparatus.

## BACKGROUND

In an existing communication system, even if no terminal device is connected in a coverage area of a cell and data transmission does not need to be performed, the cell still needs to send some public signals. These public signals are mainly used by a user who is just powered on to perform cell search and access, or used by a user in a coverage area of another cell to perform neighboring cell measurement and potential handover. For example, these public signals include a primary synchronization signal (primary synchronization signal, PSS), a secondary synchronization signal (secondary synchronization signal, SSS), a physical broadcast channel (physical Broadcast Channel, PBCH), a multicast channel carrying system information (system information, SI), and a multicast channel carrying paging (Paging). In a new radio (new radio, NR) system, a PSS, an SSS, and a PBCH are integrated together to form a synchronization signal and physical broadcast channel block (synchronization signal and physical broadcast channel block, SSB) for sending.

To improve coverage, a base station periodically sends a plurality of SSBs in a form of beam scanning. However, when more SSBs are sent, more time domain resources are occupied, resulting in large SSB overheads.

## SUMMARY

Embodiments of this application disclose a communication method and apparatus, to reduce time domain overheads for sending first information and reduce sending power consumption of a network device, to facilitate energy saving of the network device.

A first aspect of embodiments of this application discloses a communication method and apparatus, including: generating N pieces of first information, where the first information includes one or more of the following: a synchronization signal and system information; and sending the N pieces of first information to a terminal device on a same time domain resource and N frequency domain resources, where the N frequency domain resources are in a one-to-one correspondence with the N pieces of first information, and N is a positive integer greater than 1.

According to the foregoing method, the N pieces of first information are sent to the terminal device on the same time domain resource and the N frequency domain resources, so that without reducing network coverage performance, time domain overheads for sending the first information can be reduced, and sending power consumption of the network device can be reduced, to facilitate energy saving of the network device.

In a possible implementation, the sending the N pieces of first information to a terminal device on a same time domain resource and N frequency domain resources includes: sending the N pieces of first information that are same to the terminal device on the same time domain resource and the N frequency domain resources. The N pieces of first information that are same refer to N pieces of first information that are repeated. In other words, the N pieces of first information are N pieces of information that are same.

According to the foregoing method, reliability of transmitting the first information can be improved by repeatedly sending the same first information.

In another possible implementation, indexes of the N pieces of first information are the same.

In still another possible implementation, the system information includes a PBCH, and the N pieces of first information meet at least one of the following: information carried on physical broadcast channels PBCHs included in all of the N pieces of first information is the same; demodulation reference signals DMRSs for PBCHs included in all of the N pieces of first information are the same; or beam directions of all of the N pieces of first information are the same.

In still another possible implementation, the sending the N pieces of first information to a terminal device on a same time domain resource and N frequency domain resources includes: sending the N pieces of first information that are different to the terminal device on the same time domain resource and the N frequency domain resources.

According to the foregoing method, the N pieces of first information that are different are sent to the terminal device on the same time domain resource and the N frequency domain resources, so that time domain overheads for sending the first information can be reduced, sending power consumption of the network device is reduced, and an objective of energy saving is achieved.

In still another possible implementation, indexes of the N pieces of first information are different.

In still another possible implementation, the system information includes a PBCH, and the N pieces of first information meet at least one of the following: information carried on PBCHs included in two of the N pieces of first information is different; DMRSs for PBCHs included in two of the N pieces of first information are different; or beam directions of two of the N pieces of first information are different.

In still another possible implementation, when N is less than or equal to a first preset value, DMRSs for PBCHs included in two of the N pieces of first information are different, or information carried on the PBCHs included in the two of the N pieces of first information is different. Alternatively, when N is greater than a first preset value, DMRSs for PBCHs included in two of the N pieces of first information are different, and information carried on the PBCHs included in the two of the N pieces of first information is different. In other words, when N is greater than the first preset value, DMRSs for PBCHs included in two of the N pieces of first information are different and information carried on the PBCHs is different.

In still another possible implementation, when a maximum quantity L of pieces of first information in a first period is less than or equal to a second preset value, DMRSs for PBCHs included in two of the N pieces of first information are different. When a maximum quantity L of pieces of first information in a first period is greater than a second preset value, DMRSs for PBCHs included in two of the N pieces of first information are different, and information carried on the PBCHs included in the two of the N pieces of first information is different.

In still another possible implementation, the first period is duration in which the network device cyclically sends N*K pieces of first information, and N*K is a maximum quantity of pieces of first information in a cell.

In still another possible implementation, N is predefined in a protocol.

In still another possible implementation, a spacing between center frequency domain locations of two pieces of first information that are adjacent in the N pieces of first information is an integer multiple of a synchronization raster.

According to the foregoing manner, the terminal device can quickly determine a frequency domain location of each of the N pieces of first information, so that time consumption is reduced.

In still another possible implementation, a frequency domain location of each of the N pieces of first information is determined based on a frequency domain location of first reference information, and the first reference information belongs to the N pieces of first information.

In still another possible implementation, a center frequency domain location of the first reference information is determined based on a synchronization raster.

In still another possible implementation, that a frequency domain location of each of the N pieces of first information is determined based on a frequency domain location of first reference information includes: The frequency domain location of each of the N pieces of first information is determined based on the frequency domain location of the first reference information and a predefined pattern, where the predefined pattern includes an arrangement manner of the N pieces of first information.

In still another possible implementation, a time-frequency domain resource corresponding to second reference information in the N pieces of first information cannot be used for downlink data transmission, a time-frequency domain resource corresponding to one or more of the N pieces of first information other than the second reference information may be used for downlink data transmission, and the second reference information is one of the N pieces of first information.

According to the foregoing method, the time-frequency resource corresponding to the second reference information cannot be used for downlink transmission. This can avoid a case in which some terminal devices cannot access the network device when the time-frequency domain resource corresponding to each of the N pieces of first information is used for downlink data transmission. This can also avoid a case in which downlink measurement performed based on the first information is affected when the time-frequency domain resource corresponding to each of the N pieces of first information is used for downlink data transmission. In this way, impact caused by downlink data transmission can be reduced as much as possible.

In still another possible implementation, that the time-frequency domain resource corresponding to the one or more of the N pieces of first information other than the second reference information is used for downlink data transmission is indicated by using group downlink control information DCI or trigger signaling.

In still another possible implementation, that the time-frequency domain resource corresponding to the one or more of the N pieces of first information other than the second reference information is used for downlink data transmission is indicated by using group downlink control information DCI or trigger signaling includes: A frequency domain resource occupied by the group DCI or the trigger signaling belongs to a first frequency band, and a frequency domain resource in the time-frequency domain resource occupied by the one or more of the N pieces of first information other than the second reference information belongs to a second frequency band.

In still another possible implementation, when time-frequency resources corresponding to R of the N pieces of first information are used for first downlink data transmission, and time-frequency resources corresponding to (N-R) of the N pieces of first information are not used for downlink data transmission, a space domain configuration of the (N-R) pieces of first information and a space domain configuration of the first downlink data transmission are the same, and each are a first spatial domain configuration, where R is a positive integer less than or equal to N. When none of time-frequency domain resources corresponding to the N pieces of first information is used for downlink data transmission, a space domain configuration of the N pieces of first information is a second space domain configuration. The first space domain configuration is different from the second space domain configuration. That none of time-frequency domain resources corresponding to the N pieces of first information is used for downlink data transmission may mean that all the time-frequency domain resources corresponding to the N pieces of first information are used for transmitting the first information.

According to the foregoing manner, reliability of downlink data transmission can be improved.

In still another possible implementation, the first space domain configuration corresponds to a first beam width, the second space domain configuration corresponds to a second beam width, and the method further includes: sending first indication information to the terminal device, where the first indication information indicates the first beam width or the second beam width.

In still another possible implementation, S*N*K pieces of first information are sent to the terminal device in S first periods and at N frequency domain locations, K is a quantity of time domain locations in each of the S first periods, N*K pieces of first information that are different are sent in each first period, the N*K pieces of first information in each first period correspond to N*K different indexes, N*K pieces of first information at each of the N frequency domain locations in the S first periods correspond to N*K different indexes, any one of the N frequency domain locations includes N*K pieces of first information whose indexes are different in the S first periods, and the first period is duration in which the network device cyclically sends the N*K pieces of first information, where S is equal to N, K is a positive integer greater than or equal to 1, S is a positive integer greater than or equal to 1, and ⌈ ⌉ represents rounding up.

In still another possible implementation, S*N*K pieces of first information are sent to the terminal device in S first periods and at N frequency domain locations, K is a quantity of time domain locations in each of the S first periods, N*K different pieces of first information is sent in each first period, the N*K pieces of first information in each first period correspond to N*K different indexes, N*K pieces of first information at each of the N frequency domain locations in the S first periods correspond to N*K different indexes, i frequency domain locations in the N frequency domain locations include N*K pieces of first information whose indexes are different in $\lceil S/i \rceil$ first periods, and the first period is duration in which a network device cyclically sends the N*K pieces of first information, where S is equal to N, K is a positive integer greater than or equal to 1, S is a positive integer greater than or equal to 1, ⌈ ⌉ represents rounding up, and i is a positive integer greater than 1.

A second aspect of embodiments of this application discloses a communication method and apparatus. For beneficial effects, refer to the first aspect. The method includes: receiving one or more pieces of first information from a network device, where the one or more pieces of first information belong to N pieces of first information, the N pieces of first information correspond to a same time domain resource and N frequency domain resources, the N frequency domain resources are in a one-to-one correspondence with the N pieces of first information, N is a positive integer greater than 1, and the first information includes one or more of the following: a synchronization signal and system information.

In a possible implementation, the receiving one or more of N pieces of first information from a network device on a same time domain resource and N frequency domain resources includes: receiving one or more of the N pieces of first information that are same from the network device on the same time domain resource and the N frequency domain resources.

In still another possible implementation, indexes of the N pieces of first information are the same.

In still another possible implementation, the system information includes a PBCH, and the N pieces of first information meet at least one of the following: information carried on physical broadcast channels PBCHs included in all of the N pieces of first information is the same; demodulation reference signals DMRSs for PBCHs included in all of the N pieces of first information are the same; or beam directions of all of the N pieces of first information are the same.

In still another possible implementation, the N pieces of first information are N pieces of information that are different, and the receiving one or more of N pieces of first information from a network device on a same time domain resource and N frequency domain resources includes: receiving one or more of the N pieces of first information that are different from the network device on the same time domain resource and the N frequency domain resources.

In still another possible implementation, indexes of the N pieces of first information are different.

In still another possible implementation, the system information includes a PBCH, and the N pieces of first information meet at least one of the following: information carried on PBCHs included in two of the N pieces of first information is different; DMRSs for PBCHs included in two of the N pieces of first information that are different are different; or beam directions of two of the N pieces of first information are different.

In still another possible implementation, when N is less than or equal to a first preset value, DMRSs for PBCHs included in two of the N pieces of first information are different, or information carried on the PBCHs included in the two of the N pieces of first information is different. Alternatively, when N is greater than a first preset value, DMRSs for PBCHs included in two of the N pieces of first information are different, and information carried on the PBCHs included in the two of the N pieces of first information is different. In other words, when N is greater than the first preset value, DMRSs for PBCHs included in two of the N pieces of first information are different and information carried on the PBCHs is different.

In still another possible implementation, when a maximum quantity L of pieces of first information in a first period is less than or equal to a second preset value, DMRSs for PBCHs included in two of the N pieces of first information are different. When a maximum quantity L of pieces of first information in a first period is greater than a second preset value, DMRSs for PBCHs included in two of the N pieces of first information are different, and information carried on the PBCHs included in the two of the N pieces of first information is different.

In still another possible implementation, N is predefined in a protocol.

In still another possible implementation, a spacing between center frequency domain locations of two pieces of first information that are adjacent in the N pieces of first information is an integer multiple of a synchronization raster.

In still another possible implementation, a frequency domain location of each of the N pieces of first information is determined based on a frequency domain location of first reference information, and the first reference information belongs to the N pieces of first information.

In still another possible implementation, a time-frequency domain resource corresponding to second reference information in the N pieces of first information cannot be used for downlink data transmission, a time-frequency domain resource corresponding to one or more of the N pieces of first information other than the second reference information may be used for downlink data transmission, and the second reference information is one of the N pieces of first information.

In still another possible implementation, when time-frequency resources corresponding to R of the N pieces of first information are used for first downlink data transmission, and time-frequency resources corresponding to (N-R) of the N pieces of first information are not used for downlink data transmission, a space domain configuration of the (N-R) pieces of first information and a space domain configuration of the first downlink data transmission are the same, and each are a first spatial domain configuration, where R is a positive integer less than or equal to N. When none of time-frequency domain resources corresponding to the N pieces of first information is used for downlink data transmission, a space domain configuration of the N pieces of first information is a second space domain configuration. The first space domain configuration is different from the second space domain configuration.

In still another possible implementation, the N pieces of first information belong to N*K pieces of first information, the N*K pieces of first information are N*K pieces of first information that are different in a first period, minimum duration in which the terminal device can detect the N*K pieces of first information is T, T is determined based on the N*K, a bandwidth of the terminal device, and duration P of the first period, and K is a quantity of time domain locations in each first period.

In still another possible implementation, a quantity of pieces of first information that can be detected by the terminal device in the first period within the bandwidth of the terminal device is M, and T, N, K, and M meet the following relationship:

$$T = \lceil (N * K)/M \rceil * P,$$

where
$\lceil \ \rceil$ represents rounding up.

A third aspect of embodiments of this application discloses a communication apparatus. The communication apparatus may be a network device or a chip in a network device. The communication apparatus includes a processing unit and a transceiver unit. The transceiver unit is configured to send N pieces of first information to a terminal device on a same time domain resource and N frequency domain resources, where the N frequency domain resources are in a one-to-one correspondence with the N pieces of first information, the first information includes one or more of the following: a synchronization signal and system information, and N is a positive integer greater than 1.

In a possible implementation, the transceiver unit is configured to send the N pieces of first information that are same to the terminal device on the same time domain resource and the N frequency domain resources. The N pieces of first information that are same refer to N pieces of first information that are repeated. In other words, the N pieces of first information are N pieces of information that are same.

In still another possible implementation, indexes of the N pieces of first information are the same.

In still another possible implementation, the N pieces of first information meet at least one of the following: information carried on physical broadcast channels PBCHs included in all of the N pieces of first information is the same; demodulation reference signals DMRSs for PBCHs included in all of the N pieces of first information are the same; or beam directions of all of the N pieces of first information are the same.

In still another possible implementation, the transceiver unit is configured to send the N pieces of first information that are different to the terminal device on the same time domain resource and the N frequency domain resources. The N pieces of first information that are different are N pieces of information that are different.

In still another possible implementation, indexes of the N pieces of first information are different.

In still another possible implementation, the N pieces of first information meet at least one of the following: information carried on PBCHs included in two of the N pieces of first information is different; DMRSs for PBCHs included in two of the N pieces of first information are different; or beam directions of two of the N pieces of first information are different.

In still another possible implementation, a spacing between center frequency domain locations of two pieces of first information that are adjacent in the N pieces of first information is an integer multiple of a synchronization raster.

In still another possible implementation, a frequency domain location of each of the N pieces of first information is determined based on a frequency domain location of first reference information, and the first reference information belongs to the N pieces of first information.

In still another possible implementation, a time-frequency domain resource corresponding to second reference information in the N pieces of first information cannot be used for downlink data transmission, a time-frequency domain resource corresponding to one or more of the N pieces of first information other than the second reference information may be used for downlink data transmission, and the second reference information is one of the N pieces of first information.

In still another possible implementation, when time-frequency resources corresponding to R of the N pieces of first information are used for first downlink data transmission, and time-frequency resources corresponding to (N-R) of the N pieces of first information are not used for downlink data transmission, a space domain configuration of the (N-R) pieces of first information and a space domain configuration of the first downlink data transmission are the same, and each are a first spatial domain configuration, where R is a positive integer less than or equal to N. When none of time-frequency domain resources corresponding to the N pieces of first information is used for downlink data transmission, a space domain configuration of the N pieces of first information is a second space domain configuration. The first space domain configuration is different from the second space domain configuration. That none of time-frequency domain resources corresponding to the N pieces of first information is used for downlink data transmission may mean that all the time-frequency domain resources corresponding to the N pieces of first information are used for transmitting the first information.

In still another possible implementation, the transceiver unit is configured to send S*N*K pieces of first information to the terminal device in S first periods and at N frequency domain locations, where K is a quantity of time domain locations in each of the S first periods. N*K pieces of first information that are different are sent in each first period, the N*K pieces of first information in each first period correspond to N*K different indexes, N*K pieces of first information at each of the N frequency domain locations in the S first periods correspond to N*K different indexes, any one of the N frequency domain locations includes N*K pieces of first information whose indexes are different in the S first periods, and the first period is duration in which the network device cyclically sends the N*K pieces of first information, where S is equal to N, K is a positive integer greater than or equal to 1, S is a positive integer greater than or equal to 1, and $\lceil \ \rceil$ represents rounding up.

In still another possible implementation, the transceiver unit is configured to send S*N*K pieces of first information to the terminal device in S first periods and at N frequency domain locations, where K is a quantity of time domain locations in each of the S first periods. N*K different pieces of first information is sent in each first period, the N*K pieces of first information in each first period correspond to N*K different indexes, N*K pieces of first information at each of the N frequency domain locations in the S first periods correspond to N*K different indexes, i frequency domain locations in the N frequency domain locations include N*K pieces of first information whose indexes are different in $\lceil S/i \rceil$ first periods, and the first period is duration in which a network device cyclically sends the N*K pieces of first information, where in S is equal to N, K is a positive integer greater than or equal to 1, S is a positive integer greater than or equal to 1, $\lceil \ \rceil$ represents rounding up, and i is a positive integer greater than or equal to 1.

For technical effects brought by the third aspect or the possible implementations, refer to the descriptions of the technical effects brought by the first aspect or the corresponding implementations.

A fourth aspect of embodiments of this application discloses a communication apparatus. The communication apparatus may be a terminal device or a chip in a terminal device. The communication apparatus includes a processing unit and a transceiver unit. The transceiver unit is configured to receive one or more pieces of first information from a network device, where the one or more pieces of first information belong to N pieces of first information, the N pieces of first information correspond to a same time domain resource and N frequency domain resources, the N frequency domain resources are in a one-to-one correspondence with the N pieces of first information, N is a positive integer greater than 1, and the first information includes one or more of the following: a synchronization signal and system information.

In a possible implementation, the transceiver unit is configured to receive one or more of the N pieces of first information that are same from the network device on the same time domain resource and the N frequency domain resources.

In still another possible implementation, indexes of the N pieces of first information are the same.

In still another possible implementation, the N pieces of first information meet at least one of the following: information carried on physical broadcast channels PBCHs included in all of the N pieces of first information is the same; demodulation reference signals DMRSs for PBCHs included in all of the N pieces of first information are the same; or beam directions of all of the N pieces of first information are the same.

In still another possible implementation, the N pieces of first information are N pieces of information that are different, and the transceiver unit is configured to receive one or more of the N pieces of first information that are different from the network device on the same time domain resource and the N frequency domain resources.

In still another possible implementation, indexes of the N pieces of first information are different.

In still another possible implementation, the N pieces of first information meet at least one of the following: information carried on PBCHs included in two of the N pieces of first information is different; DMRSs for PBCHs included in two of the N pieces of first information that are different are different; or beam directions of two of the N pieces of first information are different.

In still another possible implementation, a spacing between center frequency domain locations of two pieces of first information that are adjacent in the N pieces of first information is an integer multiple of a synchronization raster.

In still another possible implementation, a frequency domain location of each of the N pieces of first information is determined based on a frequency domain location of first reference information, and the first reference information belongs to the N pieces of first information.

In still another possible implementation, a time-frequency domain resource corresponding to second reference information in the N pieces of first information cannot be used for downlink data transmission, a time-frequency domain resource corresponding to one or more of the N pieces of first information other than the second reference information may be used for downlink data transmission, and the second reference information is one of the N pieces of first information.

In still another possible implementation, when time-frequency resources corresponding to R of the N pieces of first information are used for first downlink data transmission, and time-frequency resources corresponding to (N-R) of the N pieces of first information are not used for downlink data transmission, a space domain configuration of the (N-R) pieces of first information and a space domain configuration of the first downlink data transmission are the same, and each are a first spatial domain configuration, where R is a positive integer less than or equal to N. When none of time-frequency domain resources corresponding to the N pieces of first information is used for downlink data transmission, a space domain configuration of the N pieces of first information is a second space domain configuration. The first space domain configuration is different from the second space domain configuration.

In still another possible implementation, the N pieces of first information belong to N*K pieces of first information, the N*K pieces of first information are N*K pieces of first information that are different in a first period, minimum duration in which the terminal device can detect the N*K pieces of first information is T, T is determined based on the N*K, a bandwidth of the terminal device, and duration P of the first period, and K is a quantity of time domain locations in each first period.

In still another possible implementation, a quantity of pieces of first information that can be detected by the terminal device in the first period within the bandwidth of the terminal device is M, and T, N, K, and M meet the following relationship:

$$T = \lceil (N * K)/M \rceil * P,$$

where

$\lceil \ \rceil$ represents rounding up.

For technical effects brought by the fourth aspect or the possible implementations, refer to the descriptions of the technical effects brought by the second aspect or the corresponding implementations.

A fifth aspect of embodiments of this application discloses a communication apparatus, including a processor and an interface circuit. The interface circuit is configured to receive a signal from another communication apparatus other than the communication apparatus and transmit the signal to the processor, or send a signal from the processor to another communication apparatus other than the communication apparatus, the processor is configured to perform the method according to the first aspect by using a logic circuit or executing code instructions.

A sixth aspect of embodiments of this application discloses a communication apparatus, including a processor and an interface circuit. The interface circuit is configured to receive a signal from another communication apparatus other than the communication apparatus and transmit the signal to the processor, or send a signal from the processor to another communication apparatus other than the communication apparatus, the processor is configured to perform the method according to the second aspect by using a logic circuit or executing code instructions.

A seventh aspect of embodiments of this application discloses a chip, where the chip includes at least one processor and an interface circuit. The at least one processor is configured to execute computer program instructions, to implement the method according to any one of the foregoing aspects.

An eighth aspect of embodiments of this application discloses a computer-readable storage medium, where the computer-readable storage medium stores computer program instructions. When the computer program instructions are run on a processor, the method according to any one of the foregoing aspects is implemented.

A ninth aspect of embodiments of this application discloses a computer program product, where the computer program product includes computer program instructions. When the computer program instructions are run on a processor, the method according to any one of the foregoing aspects is implemented.

A tenth aspect of embodiments of this application discloses a communication system, including at least one communication apparatus according to the fifth aspect and at least one communication apparatus according to the sixth aspect.

BRIEF DESCRIPTION OF DRAWINGS

The following describes accompanying drawings used in embodiments of this application.

FIG. 1 is a diagram of a structure of a communication system 1000 according to an embodiment of this application;
FIG. 2 is a diagram of a structure of an SSB according to an embodiment of this application;
FIG. 3 is a diagram of sending an SSB according to an embodiment of this application;
FIG. 4 is a schematic flowchart of a communication method according to an embodiment of this application;
FIG. 5 is a diagram of a frequency domain resource according to an embodiment of this application;
FIG. 6 is a diagram of determining a center frequency domain location of first information according to an embodiment of this application;
FIG. 7 is a diagram of determining a frequency domain location of first information according to an embodiment of this application;
FIG. 8 is a diagram of whether a time-frequency domain resource can be used for downlink data transmission according to an embodiment of this application;
FIG. 9 is a diagram of sending first information by a network device according to an embodiment of this application;
FIG. 10 is a diagram of sending first information by a network device according to an embodiment of this application;
FIG. 11 is a diagram of sending first information by a network device according to an embodiment of this application;
FIG. 12 is a diagram in which a terminal device can detect first information according to an embodiment of this application;
FIG. 13 is a diagram of a structure of a communication apparatus according to an embodiment of this application; and
FIG. 14 is a diagram of a structure of a communication apparatus according to an embodiment of this application.

DESCRIPTION OF EMBODIMENTS

The following describes embodiments of this application with reference to the accompanying drawings in embodiments of this application.

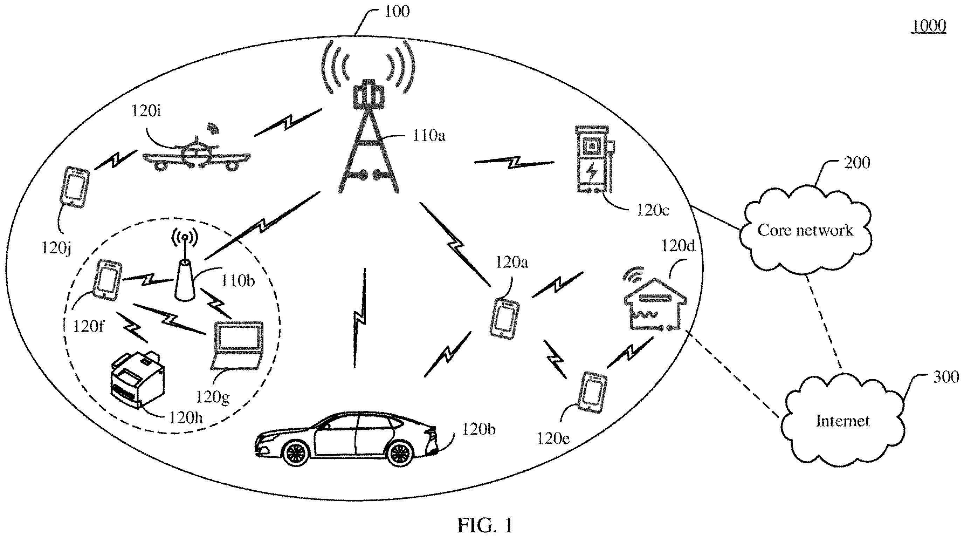

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is only a diagram. The communication system may further include another network device, for example, may further include a wireless relay device and a wireless backhaul device, which are not shown in FIG. 1.

The radio access network device may be a base station (base station), an evolved base station (evolved NodeB, eNodeB), a transmission reception point (transmission reception point, TRP), a next generation base station (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes some functions of the base station, for example, may be a central unit (central unit, CU), or may be a distributed unit (distributed unit, DU). The CU herein implements functions of the radio resource control protocol and the packet data convergence protocol (packet data convergence protocol, PDCP) of the base station, and may further implement functions of the service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The radio access network device may be a macro base station (like 110a in FIG. 1), or may be a micro base station or an indoor base station (like 110b in FIG. 1), or may be a relay node or a donor node. A specific technology and a specific device form that are used by the radio access network device are not limited in embodiments of this application. For ease of description, the following provides descriptions by using an example in which the radio access network device is a base station.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, self-driving, telemedicine, smart grid, smart furniture, smart office, smart wearable, smart transportation, and a smart city. The terminal may be a mobile phone, a tablet computer, a computer, a wearable device, a vehicle, an unmanned aerial vehicle, a helicopter, an airplane, a ship, a robot, a mechanical arm, a smart home device, or the like that has a wireless transceiver function. A specific technology and a specific device form used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an unmanned aerial vehicle 120i in FIG. 1 may be configured as a mobile base station, and for the terminal 120j accessing the radio access network 100 through 120i, the terminal 120i is a base station. However, for the base station 110a, 120i is a terminal. In other words, communication between the 110a and the 120i is performed according to a wireless air interface protocol. Certainly, 110a and 120i may alternatively communicate with each other according to an interface protocol between base stations. In this case, for 110a, 120i is also a base station. Therefore, both the base station and the terminal may be collectively referred to as a communication apparatus, 110a and 110b in FIG. 1 may be referred to as a communication apparatus having a base station function, and 120a to 120j in FIG. 1 may be referred to as a communication apparatus having a terminal function.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertzes (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem that includes a base station function herein may be a control center in an application scenario, such as a smart grid, industrial control, intelligent transportation, and a smart city. A function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes a wireless connection to the terminal is referred to as a serving cell of the terminal. When communicating with the serving cell, the terminal is further interfered by a signal from a neighboring cell.

Some terms in this application are first described, to facilitate understanding by a person skilled in the art.

(1) Synchronization signal and physical broadcast channel block (synchronization signal and physical broadcast channel block, SSB): The SSB includes a primary synchronization signal (primary synchronization signal, PSS), a secondary synchronization signal (secondary synchronization signal, SSS), and a physical broadcast channel (physical broadcast channel, PBCH). The SSB is mainly used for cell search, cell synchronization, cell identity number (cell identity number, CI), downlink timing, and system information obtaining. In new radio (new radio, NR), the SSB has two main functions: (1) cell synchronization and master system information block (master information block, MIB) obtaining; and (2) training of a transmit beam (beam) of a network device. For the cell synchronization and MIB obtaining, the PSS and the SSS carry a physical cell identifier (physical cell identifier, PCI). A terminal device obtains the PCI by detecting the PSS and the SSS. In addition, the PBCH of the SSB carries an SSB index (index), and each SSB index corresponds to one sending location. Downlink timing synchronization is completed based on a detected SSB index and a detection moment. Different SSBs in a cell are identified by using SSB indexes. One SSB pattern (SSB pattern) includes a plurality of SSB indexes, and different SSB indexes correspond to different transmit beams. The terminal device may detect an SSB, and select a best SSB index, to complete training of the transmit beam of the network device.

(2) Synchronization raster (synchronization raster): Before detecting an SSB, a terminal device does not determine a specific time-frequency resource location of the SSB. In other words, the terminal device needs to blindly detect a location of the SSB. However, because a cell bandwidth is large, if the terminal device attempts to detect the SSB on each frequency point, an access speed of the terminal device is very slow. Therefore, a synchronization raster is defined in the current protocol. The synchronization raster has different sizes in different frequency bands. The synchronization raster may be 1.2 megahertz (MHz), 1.44 MHz, and 17.28 MHz. In other words, the terminal device attempts to detect SSBs one by one at a spacing of the synchronization raster, so that a speed of detecting the SSB by the terminal device is improved. For example, as shown in Table 1, a global synchronization channel number (Global Synchronization Channel Number, GSCN) is used to mark a channel number of an SSB. Each GSCN corresponds to a frequency domain location $SS_{REF}$ of the SSB. The GSCNs are numbered in an ascending order of frequency domains. The terminal device sequentially blindly detects SSBs on these GSCNs. It may be understood that a location of the SSB definitely meets a relationship between synchronization rasters, but there may be an SSB or there may be no SSB on a frequency point determined based on the synchronization raster.

**Table 1**

| Frequency range | SSB frequency domain location $SS_{REF}$ | GSCN | GSCN range |
|---|---|---|---|
| 0 MHz to 3000 MHz | N*1200 kHz+M*50 kHz, where N=1:2499, and M $\in$ {1, 3, 5} (NOTE 1) | 3N+(M-3)/2 | 2 to 7498 |
| 3000 MHz to 24250 MHz | 3000 MHz+N*1.44 MHz, where N=0:14756 | 7499+N | 7499 to 22255 |
| 24250 MHz to 100000 MHz | 24250.08 MHz+N* 17.28 MHz, where N=0: 4383 | 22256+N | 22256 to 26639 |
| NOTE 1: A default value of an operating frequency band that supports only a subcarrier spacing (subcarrier spacing, SCS) channel grating is M=3. | | | |

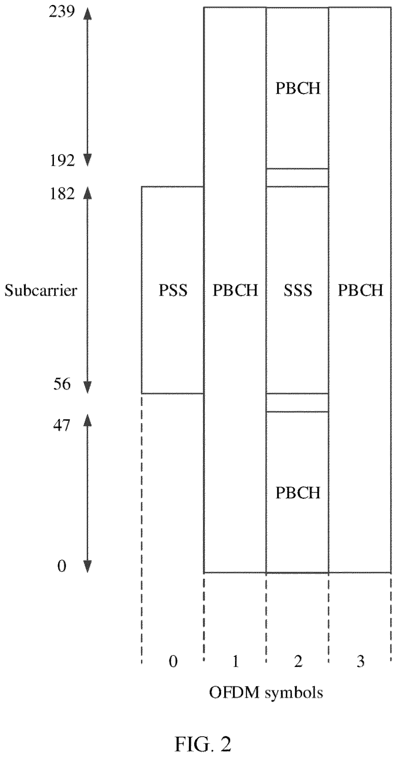

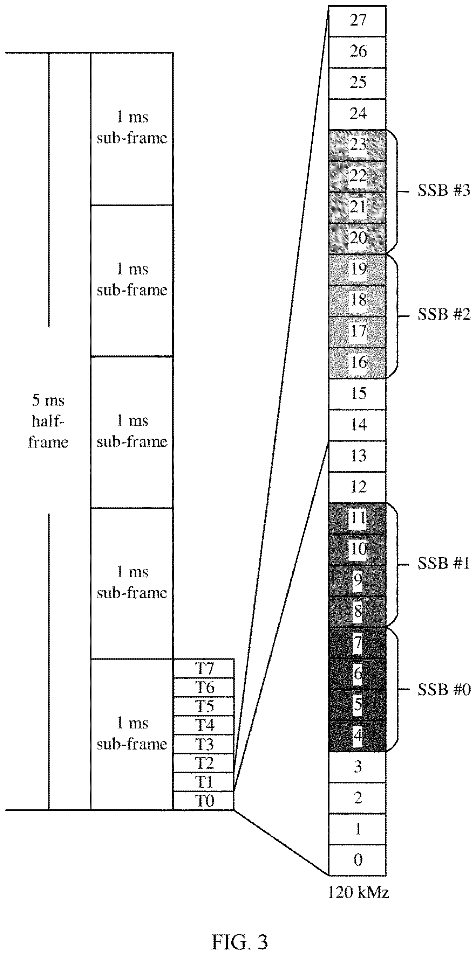

(3) SSB structure: An SSB includes three parts: a primary synchronization signal PSS, an SSS, and a PBCH. FIG. 2 shows an example of an SSB. The SSB includes an SSS of one symbol, a PSS of one symbol, and a PBCH of two symbols. A time-frequency resource occupied by the PBCH includes a demodulation reference signal (demodulation reference signal, DMRS), used to demodulate the PBCH. The SSB occupies four orthogonal frequency division multiplexing (orthogonal frequency division multiplexing, OFDM) symbols in total in time domain. The symbols are numbered from 0 to 3 in an ascending order. The SSB occupies 240 subcarriers in total in frequency domain, that is, 20 physical resource blocks (physical resource blocks, PRBs). The 240 subcarriers (subcarriers, SCs) are numbered from 0 to 239. The PSS is located on 127 subcarriers in the middle of a symbol 0. The SSS is located on 127 subcarriers in the middle of a symbol 2. To protect the PSS and SSS, two ends of the PSS and the SSS have different subcarrier sets 0. The PBCH is located on symbols 1 and 3 and the symbol 2. The PBCH occupies all subcarriers 0 to 239 on the symbols 1 and 3, and occupies all subcarriers except subcarriers occupied by the SSS and subcarrier sets 0 for protecting the SSS on the symbol 2. DMRSs are located in the middle of the PBCH. There are 60 DMRSs on each of the symbols 1 and 3 with a spacing of four subcarriers. It should be noted that FIG. 3 is an example. A structure of the SSB is not limited in this application, and a quantity of time domain symbols and subcarriers occupied by different parts of the SSB are not limited either.

Currently, to improve coverage, a base station periodically sends a plurality of SSBs in a form of beam scanning. A larger quantity of SSBs in one period indicates a larger quantity of occupied time domain resources. Especially for a high-frequency millimeter wave (millimeter wave, mmW) scenario, because there are a large quantity of SSBs in one period, a problem of large time domain resource overheads is prominent. For example, there are currently five SSB patterns (patterns), and time domain locations of SSBs are classified into five different cases: Case A, Case B, Case C, Case D and Case E, which respectively correspond to subcarrier spacings of 15 kilohertz (kHz), 30 kHz, 60 kHz, 120 kHz and 240 kHz. Case D in the SSB patterns (patterns) is used as an example. A subcarrier spacing corresponding to Case D is 240 kHz, and 64 SSBs need to be sent in one period, that is, one half-frame (Half-frame). As shown in FIG. 3, the 64 SSBs are respectively an SSB index #0 to an SSB index #63, and are located in first four sub-frames in the half-frame (Half-frame). Each of the first four sub-frames includes 16 SSBs. First four SSBs included in a first sub-frame of the first four sub-frames are respectively an SSB #0, an SSB #1, an SSB #2, and an SSB #3. Each SSB occupies four OFDM symbols. Start OFDM symbols corresponding to the SSB #0, the SSB #1, the SSB #2, and the SSB #3 are respectively #4, #8, #16, and #20. Therefore, the 64 SSBs need to occupy 64*4 OFDM symbols, and time domain resource overheads are large. Therefore, to resolve the problem, embodiments of this application provide the following solutions.

(4) Beam and space domain configuration

Both a beam (beam) and a space domain configuration are used to describe a space domain behavior of signal receiving or signal sending. Therefore, the beam and the space domain configuration usually correspond to each other. In embodiments of this application, the beam and the space domain configuration may be replaced, and the beam or the space domain configuration may alternatively be understood as one or more of the following: space domain information, configuration information of a spatial filter, a spatial filtering configuration, an antenna pattern used when first information is received or sent, and a spatial filter configuration used when first information is received or sent.

Optionally, that space domain configurations are the same may alternatively be understood as that same quasi-colocation properties (quasi-colocation properties, QCL) are used for signal transmission. For the QCL, if a channel 1 and a channel 2 meet the QCL, it may be understood that a channel characteristic of the channel 1 is obtained by using the channel 2. It may be understood that if A and B are quasi co-located, it may be considered that a channel characteristic of B may be obtained from A. Further optionally, the channel characteristic may include one or more of Doppler translation, Doppler spread, an average delay, a delay spread, and a space domain parameter.

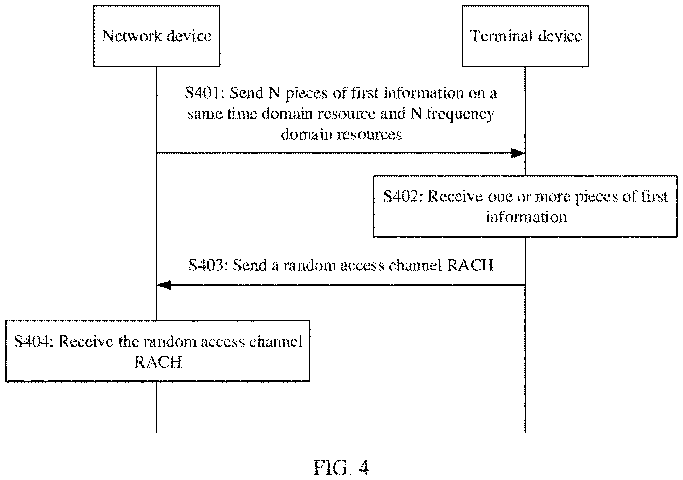

FIG. 4 shows a communication method according to an embodiment of this application. The method includes the following steps.

Step S401: A network device sends N pieces of first information to a terminal device on a same time domain resource and N frequency domain resources.

Optionally, the first information may alternatively be common information. The common information may be understood as non-dedicated information, or may be understood as information sent by one communication device to a plurality of communication devices. For example, the communication system shown in FIG. 1 is used as an example. Information sent by the base station to all terminal devices in the cell is common information. Alternatively, information sent by the base station to a group of terminal devices in the cell is also common information. Optionally, the common information may be considered as transmitting same information to a group of terminal devices.

For example, the first information includes one or more of the following: a synchronization signal and system information. N is a positive integer greater than 1. The synchronization signal may be a PSS and/or an SSS, and the system information may be a PBCH or an MIB. When the first information includes the SSS, the PSS, and the PBCH, the first information may alternatively be referred to as an SSB.

The N frequency domain resources are in a one-to-one correspondence with the N pieces of first information. In other words, one frequency domain resource corresponds to one piece of first information. The N frequency domain resources are different. In other words, the N frequency domain resources do not overlap each other. A frequency domain range of the N frequency domain resources may be a frequency domain range of mmW. For example, a frequency domain range corresponding to a frequency band of a frequency range 2 (frequency range 2, FR2) is 24250 MHz to 52600 MHz. N is predefined in a protocol, or is determined by the network device.

In an optional implementation, N is equal to 4 or 8.

In an optional implementation, before S401, the communication method shown in FIG. 4 further includes S400: Generate the N pieces of first information.

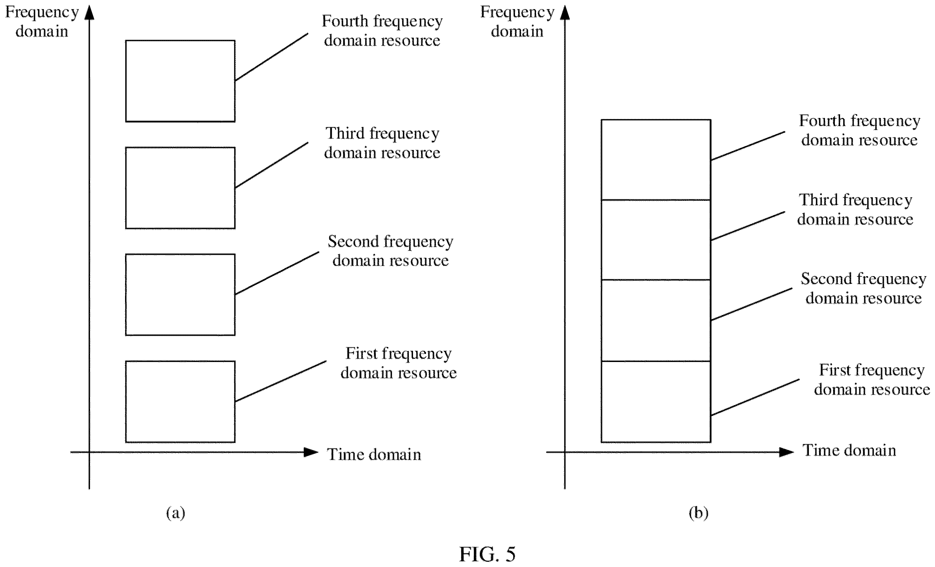

Optionally, the N frequency domain resources are different. In other words, the N frequency domain resources do not overlap each other. Optionally, that the N frequency domain resources do not overlap each other may indicate that any two of the N frequency domain resources do not include a same resource element (resource element, RE). In an example, it is assumed that N=4. In other words, four frequency domain resources are included, and the four frequency domain resources correspond to a same time domain resource. As shown in (a) in FIG. 5, there is a frequency domain spacing between any two adjacent frequency domain resources in the four frequency domain resources, and the four frequency domain resources do not overlap each other. As shown in (b) in FIG. 5, there is no frequency domain spacing between any two adjacent frequency domain resources in the four frequency domain resources, and the four frequency domain resources do not overlap each other.

That the N frequency domain resources are different is described above. The following mainly describes a center frequency domain location of each of the N pieces of first information.

In a possible implementation, a spacing between center frequency domain locations of two pieces of first information that are adjacent in the N pieces of first information is an integer multiple of a synchronization raster. In other words, the center frequency domain location of each of the N pieces of first information may be determined based on the synchronization raster.

The center frequency domain location of the first information may be a center frequency point or a center frequency of the first information. Optionally, that a spacing between center frequency domain locations of two pieces of first information that are adjacent in the N pieces of first information is an integer multiple of a synchronization raster means that a spacing between center frequency domain locations of two pieces of first information that are adjacent in the N pieces of first information is A*V, where V is a size of the synchronization raster, and A is a positive integer. Optionally, A may meet the following two cases. Case 1: A may meet the following condition: A*V is greater than or equal to a frequency domain resource occupied by one piece of first information. For example, one piece of first information occupies 20 RBs. When a subcarrier spacing is 15 kHz, a frequency domain resource occupied by the one piece of first information is 3.6 MHz. In other words, A*V needs to be greater than 3.6 MHz. Case 2: A is a minimum integer that can ensure that A*V is greater than or equal to a frequency domain resource occupied by one piece of first information. For example, it is assumed that V=1.2 MHz. One piece of first information occupies 20 RBs. When a subcarrier spacing is 15 kHz, a frequency domain resource occupied by the one piece of first information is 3.6 MHz. To ensure that A* 1.2 is greater than or equal to 3.6 MHz, A may be a positive integer greater than or equal to 3. In other words, a minimum value of A is 3. When A can ensure that A*V is greater than the frequency domain resource of the first information, a value of A is 4. Optionally, when the N frequency domain resources are in a range of 0 MHz to 3000 MHz, one synchronization raster may be 1.2 MHz; or when the N frequency domain resources are in a range of 3000 MHz to 24250 MHz, one synchronization raster may be 1.44 MHz; or when the N frequency domain resources are in a range of 24250 MHz to 100000 MHz, one synchronization raster may be 17.28 MHz.

For how to determine the center frequency domain location of each piece of first information based on the synchronization raster, refer to the foregoing descriptions of determining the frequency domain location of the SSB based on the synchronization raster. Details are not described herein again.

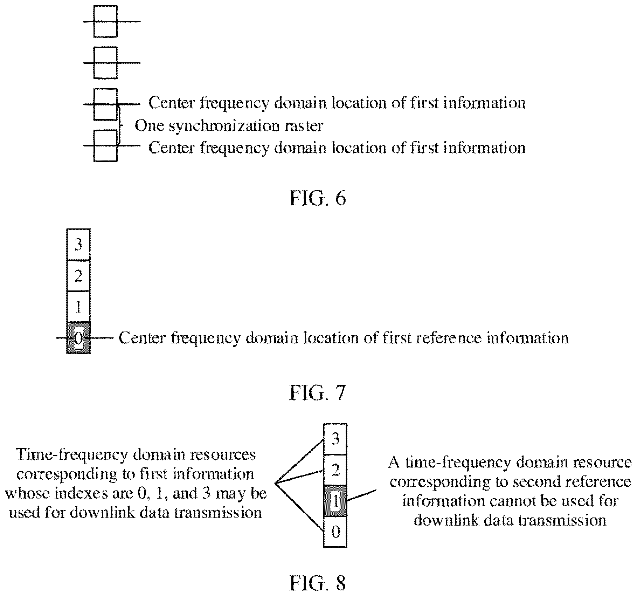

In an example, as shown in FIG. 6, it is assumed that N=4. The N frequency domain resources are in a range of 24250 MHz to 100000 MHz, and a spacing between center frequency domain locations of two adjacent pieces of first information in the four pieces of first information is one synchronization raster, where one synchronization raster may be 17.28 MHz.

According to the foregoing method, in a manner in which a spacing between center frequency domain locations of two pieces of first information that are adjacent in the N pieces of first information is an integer multiple of the synchronization raster, so that the terminal device can quickly determine a frequency domain location of each of the N pieces of first information, and time consumption is reduced.

In another possible implementation, a frequency domain location of each of the N pieces of first information is determined based on a frequency domain location of first reference information.

Specifically, the first reference information is one of the N pieces of first information. The first reference information may be predefined in a protocol or configured by the network device. A center frequency domain location of the first reference information may be determined based on a synchronization raster. Optionally, the first reference information may be first information that occupies a frequency domain resource having a smallest index in the N pieces of first information, for example, first information numbered 0 in FIG. 7. Alternatively, the first reference information is first information that occupies a frequency domain resource having a largest index in the N pieces of first information, for example, first information numbered 3 in FIG. 7. For example, the network device sends four pieces of first information to the terminal device on a same time domain resource and four frequency domain resources. For example, indexes of the four pieces of first information are 0, 1, 2, and 3, and the four pieces of first information occupy a same time domain resource. For example, the occupied time domain resource is four symbols, and the four occupied frequency domain resources are respectively 10th to 29th RBs, 30th to 49th RBs, 50th to 69th RBs, and 70th to 89th RBs. If indexes of RBs start from 1, the 10th to 29th RBs are RBs whose index numbers are 10 to 29, the 30th to 49th RBs are RBs whose index numbers are 30 to 49, the 50th to 69th RBs are RBs whose index numbers are 50 to 69, and the 70th to 89th RBs are RBs whose index numbers are 70 to 89. In this case, an index of a frequency domain resource of the 10th to 29th RBs is the smallest, and an index of a frequency domain resource of the 70th to 89th RBs is the largest.

Optionally, that a frequency domain location of each of the N pieces of first information is determined based on a frequency domain location of first reference information may include: The frequency domain location of each of the N pieces of first information is determined based on the frequency domain location of the first reference information and a predefined pattern, where the predefined pattern includes an arrangement manner of the N pieces of first information. The predefined pattern may alternatively be predefined in a protocol. The arrangement manner of the N pieces of first information may be whether there is a frequency domain spacing between two pieces of first information that are adjacent in the N pieces of first information, where the frequency domain spacing may be 0 or may not be 0.

In an example, as shown in FIG. 7, N=4. Indexes of the four pieces of first information are 0, 1, 2, and 3. The protocol predefines that first information whose index is 0 is the first reference information. In this case, the center frequency domain location of the first reference information is determined based on the synchronization raster. Then, frequency domain locations of the first information whose indexes are 1, 2, and 3 are determined based on the center frequency domain location of the first reference information and the predefined pattern, where the predefined pattern is predefined in the protocol. A frequency domain spacing between the four pieces of first information is 0.

According to the foregoing method, the frequency domain location of each of the N pieces of first information is determined based on the frequency domain location of the first reference information, so that the terminal device can quickly determine the frequency domain location of each of the N pieces of first information, and time consumption is reduced. For example, a system bandwidth is 100 MHz. If there is no synchronization raster, detection needs to be performed every 1 MHz, and detection needs to be performed 100 times. If the synchronization raster is 10 MHz, detection needs to be performed only 10 times, so that the frequency domain location of each of the N pieces of first information can be quickly determined.

The foregoing describes the frequency domain location of each of the N pieces of first information. The following describes whether time-frequency domain resources corresponding to the N pieces of first information can be used for downlink data transmission.

In still another possible implementation, a time-frequency domain resource corresponding to second reference information in the N pieces of first information cannot be used for downlink data transmission, and a time-frequency domain resource corresponding to one or more of the N pieces of first information other than the second reference information may be used for downlink data transmission. It may alternatively be understood that a time-frequency domain resource corresponding to third reference information in the N pieces of first information may be used for downlink data transmission, and a time-frequency domain resource corresponding to first information in the N pieces of first information other than the third reference information cannot be used for downlink data transmission. The third reference information may be understood as one or more pieces of first information other than the second reference information, and the second reference information may be understood as first information other than the third reference information. That time-frequency domain resource may be used for downlink data transmission does not mean that the time-frequency domain resource is used for downlink transmission only. It may be understood that when there is a transmission requirement, the downlink data may be sent on a corresponding time-frequency resource.

The second reference information is one of the N pieces of first information. The second reference information may be the same as or different from the first reference information. Alternatively, the second reference information may be predefined in a protocol or configured by the network device. For example, the second reference information may be first information that occupies a frequency domain resource having a smallest index in the N pieces of first information, for example, first information numbered 0 in FIG. 8. Alternatively, the second reference information is first information that occupies a frequency domain resource having a largest index in the N pieces of first information, for example, first information numbered 3 in FIG. 8. Details are described above, and details are not described herein again.

Optionally, indication information sent by the network device may indicate whether a time-frequency domain resource corresponding to one or more pieces of first information in the N pieces of first information other than the second reference information is used for downlink data transmission, for example, that the time-frequency domain resource corresponding to the one or more of the N pieces of first information other than the second reference information is used for downlink data transmission is indicated by using group downlink control information (downlink control information, DCI) or trigger signaling. Optionally, when that the time-frequency domain resource corresponding to the one or more of the N pieces of first information other than the second reference information is used for downlink data transmission is indicated by using group DCI or trigger signaling, a frequency domain resource occupied by the group DCI or the trigger signaling belongs to a first frequency band, and the time-frequency domain resource occupied by the one or more pieces of first information other than the second reference information in the N pieces of first information used for downlink data transmission belongs to a second frequency band. A range of the first frequency band may be 410 MHz to 7125 MHz, and a frequency domain range of the second frequency band may be 24250 MHz to 52600 MHz. The group DCI may be understood as that the network device sends one piece of DCI to a plurality of terminal devices. Correspondingly, the plurality of terminal devices receive the one piece of DCI. For the plurality of terminal devices, information carried in the group DCI is the same. Certainly, the group DCI may alternatively be understood as that the network device sends one piece of group DCI to a plurality of terminal devices, where the one piece of group DCI includes information corresponding to the plurality of terminal devices. In other words, respective information sent for the plurality of terminal devices may be jointly encoded and carried in the one piece of DCI. Correspondingly, the plurality of terminal devices parse respective information from the received group DCI.

Optionally, whether the time-frequency domain resource corresponding to the one or more pieces of first information in the N pieces of first information other than the second reference information is used for downlink data transmission may be indicated by using information carried in fourth reference information. For example, the fourth reference information may be one or more pieces of first information that are not used for downlink data transmission and that are in the N pieces of first information. Alternatively, the fourth reference information may be one or more pieces of first information in N pieces of first information that follow the N pieces of first information in time domain. In an example, it is assumed that a time-frequency domain resource corresponding to one or more pieces of first information in the N pieces of first information in a period 1 other than the second reference information is used for downlink data transmission. The fourth reference information may be one or more pieces of first information in N pieces of first information in a period 2. The fourth reference information carries information indicating that a time-frequency domain resource corresponding to one or more pieces of first information other than the second reference information in the N pieces of first information in the period 1 is used for downlink data transmission. The period 2 is an adj acent period after the period 1 in time domain.

In an example, as shown in FIG. 8, it is assumed that N pieces of first information are N pieces of information that are different. N=4, and indexes of the four pieces of first information is 0, 1, 2, and 3. The protocol predefines that first information whose index is 1 is second reference information, and a time-frequency domain resource corresponding to the second reference information cannot be used for downlink data transmission. Time-frequency domain resources corresponding to first information whose indexes are 0, 1, and 3 may be used for downlink data transmission.

According to the foregoing method, in embodiments of this application, more resources for downlink data transmission can be provided, and downlink data transmission performance can be improved. In addition, according to the foregoing method, the time-frequency resource corresponding to the second reference information cannot be used for downlink transmission. This can avoid a case in which some terminal devices cannot access the network device when the time-frequency domain resource corresponding to each of the N pieces of first information is used for downlink data transmission. This can also avoid a case in which downlink measurement performed based on the first information is affected when the time-frequency domain resource corresponding to each of the N pieces of first information is used for downlink data transmission. In this way, impact caused by downlink data transmission can be reduced as much as possible.

In a possible implementation, when time-frequency resources corresponding to R of the N pieces of first information are used for first downlink data transmission, and time-frequency resources corresponding to (N-R) of the N pieces of first information are not used for downlink data transmission, a space domain configuration of the (N-R) pieces of first information and a space domain configuration of the first downlink data transmission are the same, and each are a first spatial domain configuration, where R is a positive integer less than or equal to N. When none of time-frequency domain resources corresponding to the N pieces of first information is used for downlink data transmission, a space domain configuration of the N pieces of first information is a second space domain configuration.

Optionally, that none of time-frequency domain resources corresponding to the N pieces of first information is used for downlink data transmission may mean that all the time-frequency domain resources corresponding to the N pieces of first information are used for transmitting the first information.

The first space domain configuration corresponds to a first beam width, and the second space domain configuration corresponds to a second beam width. The beam width may be a main lobe width of an antenna pattern when the network device sends the first information in an SSB pattern. The second beam width may be greater than the first beam width. In an example, the second beam width is 22.5 degrees, and the first beam width is 2.8 degrees. The network device may send the first indication information to the terminal device, where the first indication information indicates the first beam width or the second beam width. Because the first beam width or the second beam width separately corresponds to the first space domain configuration or the second space domain configuration, the first indication information may alternatively be understood as indicating the first space domain configuration or the second space domain configuration. The first indication information may be the group DCI or the trigger signaling, the frequency domain resource occupied by the group DCI or the trigger signaling belongs to the first frequency band, and the range of the first frequency band may be 410 MHz to 7125 MHz.

In an example, N=4, R=1, and indexes of the four pieces of first information is 0, 1, 2, and 3. It is assumed that a time-frequency resource corresponding to first information whose index is 2 is used for downlink data transmission, time-frequency resources corresponding to first information whose indexes are 0, 1, and 3 are not used for downlink data transmission. Space domain configurations of the first information whose indexes are 0, 1, and 3 are the same as a space domain configuration of the first information whose index is 2. In other words, all the space domain configurations are the first space domain configuration. It is assumed that none of the time-frequency domain resources corresponding to four pieces of first information whose indexes are 0, 1, 2, and 3 is used for downlink data transmission. In other words, all the time-frequency domain resources corresponding to the four pieces of first information is used for first information transmission, and space domain configurations of the four pieces of first information are the second space domain configuration. The first space domain configuration and the second space domain configuration may be different, or may be the same.

According to the foregoing manner, reliability of downlink data transmission can be improved.

Based on N pieces of first information, this application proposes two optional manners. Manner 1: A network device sends the N pieces of first information that are same to a terminal device on a same time domain resource and N frequency domain resources. Manner 2: A network device sends the N pieces of first information that are different to a terminal device on a same time domain resource and N frequency domain resources. Therefore, the following embodiments are mainly described in detail in two parts.

Manner 1: The network device sends the N pieces of first information that are same to the terminal device on the same time domain resource and the N frequency domain resources. In other words, the N pieces of first information are N pieces of information that are same. In other words, the network device sends the N pieces of first information that are repeated to the terminal device on the same time domain resource and the N frequency domain resources.

Example 1: Indexes of the N pieces of first information are the same. In other words, the N pieces of first information include the same indexes.

Example 2: The N pieces of first information may meet at least one of the following: The N pieces of first information include SSBs, and information carried on PBCHs included in all of the N pieces of first information is the same; or the N pieces of first information include SSBs, and DMRSs for PBCHs included in all of the N pieces of first information are the same; or beam directions of all of the N pieces of first information are the same; or synchronization signals included in all of the N pieces of first information are the same; or beams of all of the N pieces of first information are the same.

Specifically, that all pieces of first information include the same synchronization signals may mean that all pieces of first information include same PSSs, or may mean that all pieces of first information include same SSSs, or may mean that all pieces of first information include same PSSs and same SSSs. That DMRSs are the same may mean that DMRS sequences are the same. Alternatively, that beam directions are the same may mean that at least one of the following is the same: space domain information, configuration information of a spatial filter, a spatial filtering configuration, an antenna pattern used when the first information is sent, and a spatial filter used when the first information is sent. In embodiments of this application, the DMRS is a DMRS included in the first information or a DMRS of a PBCH included in the first information.

Optionally, N is predefined in a protocol, or is determined by the network device. For example, when a required network coverage area is large, N may be large; or when a required network coverage area is small, N may be small. For example, for a user at an edge of a cell, N may be large. For a user at a center of a cell, N may be small. According to the foregoing method, coverage of the first information can be improved.

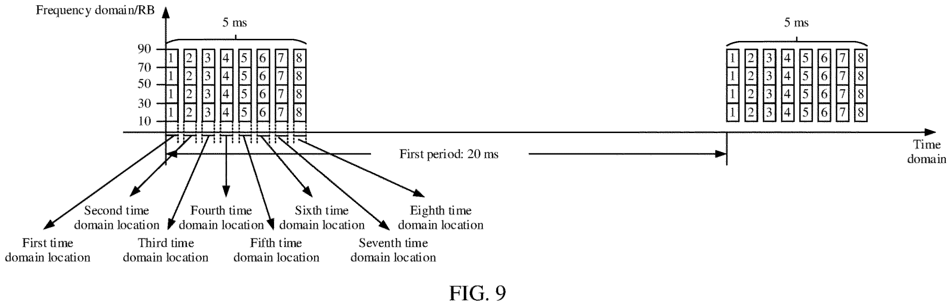

In an example, as shown in FIG. 9, N=4, and K=8. K=8 indicates that 8 time domain locations are included in a first period. The first period is 20 ms, and the 20 ms includes duration in which the network device cyclically sends N*K=4*8=32 pieces of first information. To be specific, the network device sends, every 20 ms, first information whose indexes are 1 to 8. The first period includes 8 time domain locations. Each time domain location and four frequency domain locations corresponding to each time domain location are used to send four pieces of first information whose indexes are the same. In other words, the network device may send, to the terminal device, four pieces of first information whose indexes are the same on a same time domain resource and four frequency domain resources, for example, four pieces of first information whose indexes are all 1, four pieces of first information whose indexes are all 2, four pieces of first information whose indexes are all 3, four pieces of first information whose indexes are all 4, four pieces of first information whose indexes are all 5, four pieces of first information whose indexes are all 6, four pieces of first information whose indexes are all 7, and four pieces of first information whose indexes are all 8. For example, four pieces of first information whose indexes are all 1 occupy a same time domain resource. For example, the occupied time domain resource is four symbols. The four occupied frequency domain resources are respectively 10th to 29th RBs, 30th to 49th RBs, 50th to 69th RBs, and 70th to 89th RBs. For the four pieces of first information whose indexes are all 2, the four pieces of first information whose indexes are all 3, the four pieces of first information whose indexes are all 4, the four pieces of first information whose indexes are all 5, the four pieces of first information whose indexes are all 6, the four pieces of first information whose indexes are all 7, and the four pieces of first information whose indexes are all 8, refer to the descriptions of the four pieces of first information whose indexes are all 1. Details are not described herein again.

In Manner 1, when the N pieces of first information are the N pieces of first information that are same, correspondingly, the terminal device may jointly receive the N pieces of first information that are same.

According to the foregoing method, reliability of transmitting the first information can be improved by repeatedly sending the same first information.

Manner 2: The network device sends the N pieces of first information that are different to the terminal device on the same time domain resource and the N frequency domain resources. In other words, the N pieces of first information are N pieces of information that are different. It may be understood that a multiplexing manner of the N pieces of first information is frequency division multiplexing. The N pieces of first information are different. The following provides several different examples. It should be understood that different examples may be combined.

Example 1: Indexes of the N pieces of first information are different. In other words, the N pieces of first information include different indexes.

Example 2: The N pieces of first information may meet at least one of the following: The N pieces of first information include SSBs, and information carried on PBCHs included in two of the N pieces of first information is different; or the N pieces of first information include SSBs, DMRSs for PBCHs included in two of the N pieces of first information are different; or beam directions of the two of the N pieces of first information are different; or the N pieces of first information include SSBs, and synchronization signals included in two of the N pieces of first information are different; or beams of two of the N pieces of first information are different. In other words, the N pieces of first information may meet at least one of the following: information carried on PBCHs included in all of the N pieces of first information is not completely the same; DMRSs for PBCHs included in all of the N pieces of first information are not completely the same; beam directions of all of the N pieces of first information are not completely the same; synchronization signals included in all of the N pieces of first information are not completely the same; or beams of all of the N pieces of first information are not completely the same.

Specifically, that information carried on PBCHs included in two of the N pieces of first information is different may include a case in which information carried on PBCHs included in all of the N pieces of first information is different. That DMRSs for PBCHs included in two of the N pieces of first information are different may include a case in which DMRSs for PBCHs included in all of the N pieces of first information are different.

Optionally, that information carried on PBCHs included in two of the N pieces of first information is different may mean that DMRSs for PBCHs in the two pieces of first information is the same, but information carried on PBCHs in the two pieces of first information is different. That DMRSs for PBCHs included in two of the N pieces of first information are different may mean that information carried on the PBCHs in the two pieces of first information is the same, but DMRSs of the PBCHs in the two pieces of first information are different. In an example, it is assumed that N=4. Four pieces of first information are information 1, information 2, information 3, and information 4. DMRSs for PBCHs of the information 1 and the information 2 are the same, but information carried on the PBCHs in the information 1 and the information 2 is different. In still another example, it is assumed that N=4. Four pieces of first information are information 1, information 2, information 3, and information 4. Information carried on PBCHs of the information 1 and the information 2 is the same, but DMRSs for PBCHs of the information 1 and the information 2 are different.

Optionally, that synchronization signals included in two of the N pieces of first information are different may mean that PSSs included in two of the N pieces of first information are different, or may mean that SSSs included in two of the N pieces of first information are different, or may mean that PSSs and SSSs included in two of the N pieces of first information are different. That DMRSs are different may mean that DMRS sequences are different. That PBCHs are different may mean that index-related information carried on the PBCHs is different. That beam directions are different may mean that at least one of the following is different: space domain information, configuration information of a spatial filter, a spatial filtering configuration, an antenna pattern used when the first information is sent, and a spatial filter used to send the first information.

In an example, it is assumed that N=4. Four pieces of first information are information 1, information 2, information 3, and information 4. Information carried on PBCHs included in the information 1 and the information 2 is different, but information carried on PBCHs included in the information 1, the information 3, and the information 4 is the same. In still another example, it is assumed that N=4. Four pieces of first information are information 1, information 2, information 3, and information 4. Information carried on PBCHs included in the information 1, the information 2, the information 3, and the information 4 is different.

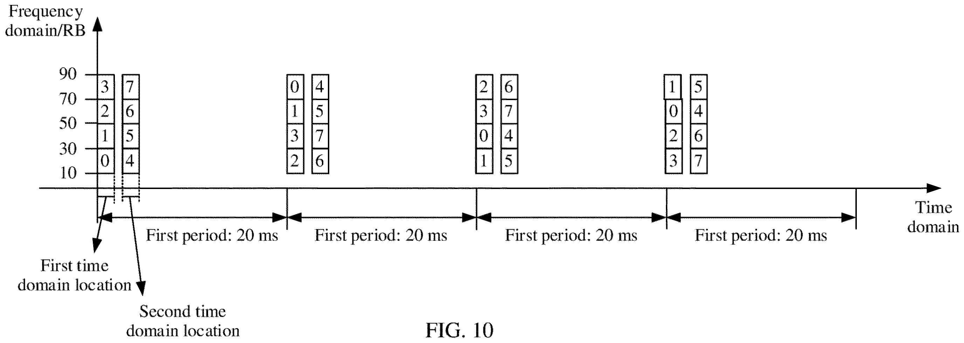

In an example, as shown in FIG. 10, N=4, and K=2. K=2 indicates that 2 time domain locations are included in a first period. The first period is 20 ms, and the 20 ms includes duration in which the network device cyclically sends 4*2=8 pieces of first information. To be specific, the network device sends, every 20 ms, first information whose indexes are 0 to 7. The first period includes two time domain locations. Each time domain location and four frequency domain locations corresponding to each time domain location are used to send four pieces of first information whose indexes are different. In other words, the network device sends four pieces of first information that are different to the terminal device on a same time domain resource and four frequency domain resources. For example, indexes of the four pieces of first information are respectively 0, 1, 2, and 3, and the four pieces of first information occupy a same time domain resource. For example, the occupied time domain resource is four symbols, and the four occupied frequency domain resources are 10th to 29th RBs, 30th to 49th RBs, 50th to 69th RBs, and 70th to 89th RBs. Alternatively, indexes of the four pieces of first information are respectively 4, 5, 6, and 7, and the four pieces of first information occupy a same time domain resource. For example, the occupied time domain resource is four symbols, and the four occupied frequency domain resources are 10th to 29th RBs, 30th to 49th RBs, 50th to 69th RBs, and 70th to 89th RBs.

According to the foregoing method, the N pieces of first information that are different are sent to the terminal device on the same time domain resource and the N frequency domain resources, so that time domain overheads for sending the first information can be reduced, sending power consumption of the network device is reduced, and an objective of energy saving is achieved.

Optionally, the N pieces of first information in Manner 2 are different, and the following provides several examples.

Example A: When N is less than or equal to a first preset value, DMRSs for PBCHs included in two of the N pieces of first information are different, or information carried on PBCHs included in two of the N pieces of first information is different. Optionally, that DMRSs for PBCHs included in two of the N pieces of first information are different may mean that information carried on the PBCHs in the two pieces of first information is the same, but DMRSs of the PBCHs in the two pieces of first information are different. That information carried on PBCHs included in two of the N pieces of first information is different may mean that DMRSs for PBCHs in the two pieces of first information is the same, but information carried on PBCHs in the two pieces of first information is different.

When N is greater than the first preset value, DMRSs for PBCHs included in two of the N pieces of first information are different, and information carried on the PBCHs included in the two of the N pieces of first information is different. Optionally, that DMRSs for PBCHs included in two of the N pieces of first information are different, and information carried on the PBCHs included in the two of the N pieces of first information is different may be understood as: In the N pieces of first information, the DMRSs of the PBCHs included in the two pieces of first information are different, and the information carried on the PBCHs included in the two pieces of first information is different. In other words, the two pieces of first information that include different DMRSs on the PBCHs and the two pieces of first information that include different information carried on the PBCHs may be two pieces of first information that are same. In an example, it is assumed that N=4. Four pieces of first information are information 1, information 2, information 3, and information 4. DMRSs for PBCHs included in the information 1 and the information 2 are different, and information carried on the PBCHs included in the information 1 and the information 2 is different.

The indexes of the N pieces of first information are indicated by using at least one of the following: a DMRS sequence and information carried on a PBCH. In other words, for the N pieces of first information, different DMRS sequences may identify different indexes. For example, N is 64. The DMRSs have 8 sequences. The 8 sequences respectively identify 8 indexes. The 8 DMRS sequences may be indicated by using different 3-bit state words. A bit field of information carried on the PBCH occupies three bits. The three bits corresponding to the DMRS sequences and the three bits occupied by the bit field of the information carried on the PBCH may distinguish indexes of 64 pieces of first information.

In an example, it is assumed that N=4. The first preset value is 8. Because 4 is less than 8, DMRSs for PBCHs included in two of the four pieces of first information are different, or information carried on PBCHs included in two of the four pieces of first information is different. In still another example, it is assumed that N=4. The first preset value is 8. In this case, DMRSs for PBCHs included in two of the four pieces of first information are different, and information carried on the PBCHs included in the two of the four pieces of first information is different.

Example B: In still another possible implementation, when a maximum quantity L of pieces of first information in a first period is less than or equal to a second preset value, DMRSs for PBCHs included in two of the N pieces of first information are different, or DMRSs for PBCHs included in any two of the N pieces of first information are different. Optionally, that DMRSs for PBCHs included in two of the N pieces of first information are different may mean that information carried on the PBCHs in the two pieces of first information is the same, but DMRSs of the PBCHs in the two pieces of first information are different. That information carried on PBCHs included in two of the N pieces of first information is different may mean that DMRSs for PBCHs in the two pieces of first information is the same, but information carried on PBCHs in the two pieces of first information is different.

When the maximum quantity L of pieces of first information in the first period is greater than the second preset value, DMRSs for PBCHs included in two of the N pieces of first information are different, and information carried on the PBCHs included in the two of the N pieces of first information is different. Alternatively, when the maximum quantity L of pieces of first information in the first period is greater than the second preset value, at least one of DMRSs for PBCHs included in any two of the N pieces of first information and information carried on the PBCHs is different. Optionally, that DMRSs for PBCHs included in two of the N pieces of first information are different, and information carried on the PBCHs included in the two of the N pieces of first information is different may be understood as: In the N pieces of first information, the DMRSs of the PBCHs included in the two pieces of first information are different, and the information carried on the PBCHs included in the two pieces of first information is different. In other words, the two pieces of first information that include different DMRSs on the PBCHs and the two pieces of first information that include different information carried on the PBCHs may be two pieces of first information that are same. In an example, it is assumed that N=4. Four pieces of first information are information 1, information 2, information 3, and information 4. DMRSs for PBCHs included in the information 1 and the information 2 are different, and information carried on the PBCHs included in the information 1 and the information 2 is different.

Optionally, L may be equal to N*K. In an example, as shown in FIG. 9, N=4, K=8, and L=N*K=32. As shown in FIG. 10, N=4, K=2, and L=N*K=8. Optionally, L may alternatively be a quantity of indexes in an index set of the first information in the first period. In an example, the maximum quantity of pieces of first information in the first period may be a quantity of indexes in the index set of the first information in the first period. As shown in FIG. 9, there are 8 indexes in the index set of the first information in the first period. In other words, a maximum quantity L of pieces of first information in the first period is equal to 8. As shown in FIG. 10, there are 8 indexes in the index set of the first information in the first period. In other words, a maximum quantity L of pieces of first information in the first period is equal to 8.

Optionally, the maximum quantity of pieces of first information in the first period may be a quantity of pieces of first information sent by the network device, or may be a maximum quantity of pieces of first information specified in a protocol. For example, a protocol specifies that a maximum quantity of pieces of first information that are allowed to be sent in a cell is 8, and a quantity of pieces of first information sent by the network device is 7. In this case, a maximum quantity of pieces of first information in the cell may be 8 or 7. This is not limited in this application.

Optionally, the first period is duration in which the network device cyclically sends N*K pieces of first information, and N*K is a maximum quantity of pieces of first information in a cell. As shown in FIG. 9, the first period is 20 ms, N=4, and K=8. K=8 indicates that 8 time domain locations are included in the first period, and the 20 ms includes duration in which the network device cyclically sends 4*8=32 pieces of first information. As shown in FIG. 10, the first period is 20 ms, N=4, and K=2. K=2 indicate that 2 time domain locations are included in the first period, and the 20 ms includes duration in which the network device cyclically sends 4*2=8 pieces of first information.

Optionally, at least one of DMRSs for PBCHs included in any two of the N pieces of first information and information carried on the PBCHs is different. For example, DMRSs for PBCHs included in any two of the N pieces of first information is different, or information carried on PBCHs included in any two of the N pieces of first information is different. Alternatively, DMRSs for PBCHs included in any two of the N pieces of first information are different and information carried on the PBCHs is different.

The first preset value may be the same as or different from the second preset value. The first preset value and the second preset value may be predefined according to a protocol. For example, both the first preset value and the second preset value are 8.

In an example, it is assumed that a maximum quantity L of pieces of first information in the first period is equal to 4, and the second preset value is 8. Because 4 is less than 8, DMRSs for PBCHs included in two of the N pieces of first information are different. In still another example, it is assumed that a maximum quantity L of pieces of first information in the first period is 12, and the second preset value is 8. Because 12 is greater than 8, DMRSs for PBCHs included in two of the N pieces of first information are different, and information carried on the PBCHs included in the two pieces of first information is different.

In a possible implementation, the network device sends S*N*K pieces of first information to the terminal device in S first periods and at N frequency domain locations, where K is a quantity of time domain locations in each of the S first periods. N*K pieces of first information that are different are sent in each first period, the N*K pieces of first information in each first period correspond to N*K different indexes, N*K pieces of first information at each of the N frequency domain locations in the S first periods correspond to N*K different indexes, any one of the N frequency domain locations includes N*K pieces of first information whose indexes are different in the S first periods, and the first period is duration in which the network device cyclically sends the N*K pieces of first information, where S is equal to N, K is a positive integer greater than or equal to 1, S is a positive integer greater than or equal to 1, $\lceil \rceil$ represents rounding up, and i is a positive integer greater than or equal to 1.

Optionally, each of the N frequency domain locations represents an entire frequency domain block that carries the first information. For example, 20 consecutive RBs may be one frequency domain location.

Optionally, the time domain location represents an entire time domain block that carries the first information. For example, time domain occupied by four consecutive OFDM symbols may be one time domain location.

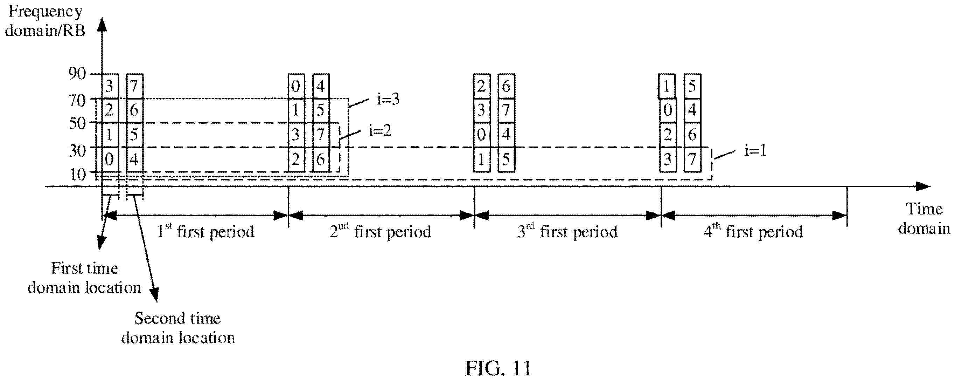

In an example, as shown in FIG. 11, S=4, N=4, and K=2. Four first periods are respectively a 1st first period, a 2nd first period, a 3rd first period, and a 4th first period. The first period may be 20 ms. The 20 ms is duration in which the network device cyclically sends 4*2=8 pieces of first information. In other words, the network device sends, in each 20 ms, first information whose indexes are 0 to 7. A quantity K of time domain locations in each of the four first periods is 2, and the time domain locations are respectively a first time domain location and a second time domain location. Four frequency domain locations are respectively 10th to 29th RBs, 30th to 49th RBs, 50th to 69th RBs, and 70th to 89th RBs. The network device sends 4*4*2=32 pieces of first information to the terminal device in four first periods and four frequency domain locations, and sends N*K=4*2=8 pieces of first information that are different in each first period. The 8 pieces of first information in each first period correspond to 8 different indexes. For example, 8 different indexes corresponding to the 8 pieces of first information in the 1st first period are respectively 0, 1, 2, 3, 4, 5, 6, and 7, and 8 different indexes corresponding to the 8 pieces of first information in the 2nd first period are respectively 2, 3, 1, 0, 6, 7, 5, and 4. Eight pieces of first information in four first periods of each of the four frequency domain locations correspond to 8 different indexes. For example, 8 different indexes corresponding to the 8 pieces of first information in the four first periods of the 10th to 29th RBs are respectively 0, 4, 2, 6, 1, 5, 3, and 7, and 8 different indexes corresponding to 8 pieces of first information in the four first periods of the 30th to 49th RBs are respectively 1, 5, 3, 7, 0, 4, 2, and 6.

Any one of the four frequency domain locations includes 8 pieces of first information whose indexes are different in S = 4 first periods. For example, one of the four frequency domain locations is the 10th to 29th RBs. The four first periods are respectively the 1st first period, the 2nd first period, the 3rd first period, and the 4th first period. In this case, indexes of 8 pieces of first information that are included in the 10th to 29th RBs and whose indexes are different in the 1st first period, the 2nd first period, the 3rd first period, and the 4th first period are 0, 4, 2, 6, 1, 5, 3, and 7.

In still another possible implementation, the network device sends S*N*K pieces of first information to the terminal device in S first periods and at N frequency domain locations, where K is a quantity of time domain locations in each of the S first periods. N*K pieces of first information that are different are sent in each first period. The N*K pieces of first information in each first period correspond to N*K different indexes. The N*K pieces of first information in S first periods of each of the N frequency domain locations correspond to N*K different indexes.

Further, optionally, i of the N frequency domain locations include N*K pieces of first information whose indexes are different in $\lceil S/i \rceil$ first periods. The first period is duration in which the network device cyclically sends the N*K pieces of first information, where S is equal to N, K is a positive integer greater than or equal to 1, S is a positive integer greater than or equal to 1, $\lceil \ \rceil$ represents rounding up, and i is a positive integer greater than or equal to 1.

In an example, as shown in FIG. 11, S=4, N=4, and K=2. Four first periods are respectively a 1st first period, a 2nd first period, a 3rd first period, and a 4th first period. The first period may be 20 ms. The 20 ms is duration in which the network device cyclically sends 4*2=8 pieces of first information. In other words, the network device sends, in each 20 ms, first information whose indexes are 0 to 7. A quantity K of time domain locations in each of the four first periods is 2, and the time domain locations are respectively a first time domain location and a second time domain location. Four frequency domain locations are respectively 10th to 29th RBs, 30th to 49th RBs, 50th to 69th RBs, and 70th to 89th RBs. The network device sends 4*4*2=32 pieces of first information to the terminal device in four first periods and four frequency domain locations, and sends N*K=4*2=8 pieces of first information that are different in each first period. The 8 pieces of first information in each first period correspond to 8 different indexes. For example, 8 different indexes corresponding to the 8 pieces of first information in the 1st first period are respectively 0, 1, 2, 3, 4, 5, 6, and 7, and 8 different indexes corresponding to the 8 pieces of first information in the 2nd first period are respectively 2, 3, 1, 0, 6, 7, 5, and 4. Eight pieces of first information in four first periods of each of the four frequency domain locations correspond to 8 different indexes. For example, 8 different indexes corresponding to the 8 pieces of first information in the four first periods of the 10th to 29th RBs are respectively 0, 4, 2, 6, 1, 5, 3, and 7, and 8 different indexes corresponding to 8 pieces of first information in the four first periods of the 30th to 49th RBs are respectively 1, 5, 3, 7, 0, 4, 2, and 6.

For example, i=2. Two of the four frequency domain locations include 8 pieces of first information whose indexes are different in $\lceil S/i \rceil = \lceil 4/2 \rceil = 2$ first periods. For example, the two of the four frequency domain locations are respectively 10th to 29th RBs and 30th to 49th RBs. The 2 first periods are respectively a 1st first period and a 2nd first period. In this case, indexes of 8 pieces of first information that are included in the 10th to 29th RBs and the 30th to 49th RBs and whose indexes are different in the 1st first period and the 2nd first period are respectively 0, 1, 4, 5, 2, 3, 6, and 7.

For example, i=3. Three of the four frequency domain locations include at least 8 pieces of first information whose indexes are different in $\lceil S/i \rceil = \lceil 4/3 \rceil = 2$ first periods. For example, the 3 of the four frequency domain locations are respectively 10th to 29th RBs, 30th to 49th RBs, and 50th to 69th RBs. The 2 first periods are respectively a 1st first period and a 2nd first period. In this case, the 10th to 29th RBs, the 30th to 49th RBs, and the 50th to 69th RBs include 12 pieces of first information in the 1st first period and the 2nd first period, and indexes of the 12 pieces of first information are respectively 0, 1, 2, 4, 5, 6, 2, 3, 1, 6, 7 and 5. Because the 12 pieces of first information include first information with a same index sequence number, the 10th to 29th RBs, the 30th to 49th RBs, and the 50th to 69th RBs include at least N*K=4*2=8 pieces of first information whose indexes are different in the 1st first period and the 2nd first period.

Step S402: The terminal device receives one or more pieces of first information from the network device.

The one or more pieces of first information belong to the N pieces of first information. The N pieces of first information correspond to a same time domain resource and N frequency domain resources. The N frequency domain resources are in a one-to-one correspondence with the N pieces of first information, where N is a positive integer greater than 1. The first information includes one or more of the following: a synchronization signal and system information.

In a possible implementation, the N pieces of first information belong to N*K pieces of first information, the N*K first periods are N*K pieces of first information that are different in a first period, minimum duration in which the terminal device can detect the N*K pieces of first information is T, T is determined based on the N*K, a bandwidth of the terminal device, and duration P of the first period, and K is a quantity of time domain locations in each first period.

In a possible implementation, a quantity of pieces of first information that can be detected by the terminal device in the first period within the bandwidth of the terminal device is M. In other words, the terminal device can detect, within the minimum duration T, the maximum quantity N*K of pieces of first information sent by the network device in the first period, where T is determined based on N*K, M, and the duration P of the first period. Further, optionally, K, N, T, and M meet the following relationship:

$$T = \lceil (N * K)/M \rceil * P,$$

where

⌈ ⌉ represents rounding up.

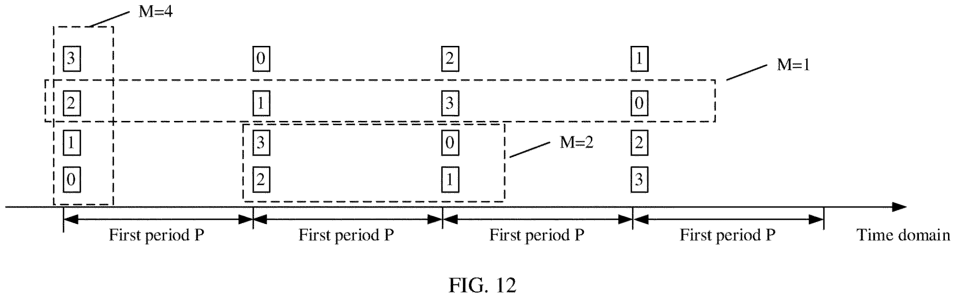

In an example, as shown in FIG. 12, N=4, K=1, and N*K=4* 1=4. In other words, the maximum quantity of pieces of first information sent by the network device in the first period is N*K=4* 1=4. For example, M=1. In other words, the quantity of pieces of first information that can be detected by the terminal device in the first period within the bandwidth of the terminal device is 1. The minimum duration in which the terminal device can detect the four pieces of first information is $T=[(N*K)/M]*P = [(4*1)/1]*P = 4P$. For example, if M=2, the minimum duration in which the terminal device can detect the four pieces of first information is $T=[(N*K)/M]*P = [(4*1)/2]*P = 2P$. For example, if M=4, the minimum duration in which the terminal device can detect the four pieces of first information is $T=[(N*K)/M]*P = [(4*1)/4]*P = P$.

According to the foregoing method, in the foregoing manner, the terminal device can detect, within the minimum duration T, the maximum quantity N*K of pieces of first information sent by the network device in the first period. In other words, the terminal device can detect, in a short time, a maximum quantity N*K of pieces of first information sent by the network device in one period. In addition, a better service can be provided for terminal devices having different bandwidth capabilities.

Step S403: The terminal device sends a random access channel (random access channel, RACH) to the network device.

Optionally, the first information includes configuration information of the RACH, and the configuration information includes all or some configuration parameters of the RACH. When all the N pieces of first information are a synchronization signal, all or a part of configuration parameters of the RACH included in the configuration information are in the synchronization signal. When the N pieces of first information are a synchronization signal and system information, a part of configuration parameters of the RACH are in the synchronization signal, and the other configuration parameters may be in the system information.

Optionally, the terminal device may determine, based on the first information, one or more of a time-frequency resource, a sequence, and a space domain configuration for sending the RACH. For example, the terminal device determines a quantity L of pieces of first information in a first period, and the terminal device determines a first time-frequency resource set, where the first time-frequency resource set includes B time-frequency resources. The L pieces of first information correspond to the first time-frequency resource set. The terminal device determines L time-frequency resource subsets. The L time-frequency resource subsets are in a one-to-one correspondence with the L pieces of first information. The L time-frequency resource subsets belong to the first time-frequency resource set. Optionally, the first time-frequency resource subset is a time-frequency resource subset that is in the L time-frequency resource subsets and that corresponds to the first information received by the terminal device. The terminal device sends the RACH by using a first RACH time-frequency resource. The first RACH time-frequency resource belongs to the first time-frequency resource subset. Optionally, L is less than or equal to B.

Optionally, the first RACH time-frequency resource corresponds to A pieces of first information. The A pieces of first information include the first information received by the terminal device. The A pieces of first information correspond to C preambles. The A pieces of first information are in a one-to-one correspondence with A preamble subsets. Preambles included in the A preamble subsets belong to the C preambles. The terminal device sends the RACH by using a preamble in a first preamble subset. The first preamble subset is a preamble subset that is in the A preamble subsets and that corresponds to the first information received by the terminal device. Optionally, A is less than or equal to C.

Step S404: The network device receives the RACH from the terminal device.

Optionally, the first information includes configuration information of the RACH, and the configuration information includes one or more configuration parameters of the RACH. When all the N pieces of first information are a synchronization signal, all or a part of configuration parameters of the RACH included in the configuration information are in the synchronization signal. When the N pieces of first information are a synchronization signal and system information, a part of the parameters of the RACH included in the configuration information are configured in the synchronization signal, and the other parameters are configured in the system information.

Optionally, the network device receives the RACH from the terminal device on the time-frequency resource corresponding to sending the first information. For example, the network device determines a quantity L of pieces of first information in a first period, and the network device determines a first time-frequency resource set, where the first time-frequency resource set includes B time-frequency resources. The L pieces of first information correspond to the first time-frequency resource set. The network device determines L time-frequency resource subsets. The L time-frequency resource subsets are in a one-to-one correspondence with the L pieces of first information. The L time-frequency resource subsets belong to the first time-frequency resource set. Optionally, the first time-frequency resource subset is a time-frequency resource subset that is in the L time-frequency resource subsets and that corresponds to the first information sent by the network device. The network device receives the RACH on a first RACH time-frequency resource. The first RACH time-frequency resource belongs to the first time-frequency resource subset. Optionally, L is less than or equal to B.

The first RACH time-frequency resource corresponds to A pieces of first information. The A pieces of first information include the first information sent by the network device. The A pieces of first information correspond to C preambles. The A pieces of first information are in a one-to-one correspondence with A preamble subsets. Preambles included in the A preamble subsets belong to the C preambles. The network device receives the RACH by using a preamble in a first preamble subset. The first preamble subset is a preamble subset that is in the A preamble subsets and that corresponds to the first information sent by the network device. Optionally, A is less than or equal to C.

According to the foregoing method, the N pieces of first information are sent to the terminal device on the same time domain resource and the N frequency domain resources, so that without reducing network coverage performance, time domain overheads for sending the first information can be reduced, and sending power consumption of the network device can be reduced, to facilitate energy saving of the network device.

It may be understood that, to implement the functions in the foregoing embodiments, the network device and the terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by using hardware or hardware driven by computer software depends on a particular application scenario and design constraint of the technical solutions.

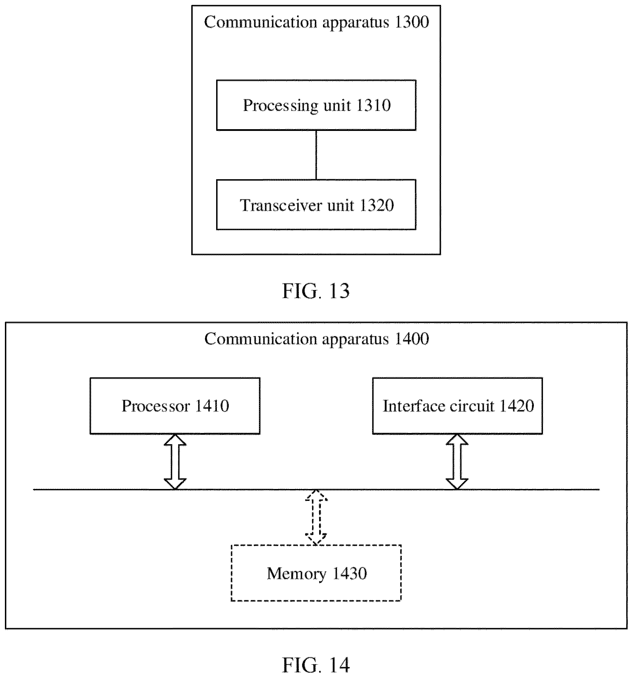

FIG. 13 and FIG. 14 each are a diagram of a structure of a possible communication apparatus according to an embodiment of this application. These communication apparatuses may be configured to implement functions of the network device or the terminal device in the foregoing method embodiments. Therefore, beneficial effects of the foregoing method embodiments can also be implemented. In embodiments of this application, the communication apparatus may be the radio access network device (for example, 110a and 110b in FIG. 1) shown in FIG. 1, or may be the terminal (for example, 120a to 120j in FIG. 1) shown in FIG. 1, or may be a module (such as a chip) applied to a network device or a terminal device.

As shown in FIG. 13, a communication apparatus 1300 includes a processing unit 1310 and a transceiver unit 1320. The communication apparatus 1300 is configured to implement functions of the network device or the terminal device in the method embodiment shown in FIG. 4.

When the communication apparatus 1300 is configured to implement the functions of the network device in the method embodiment shown in FIG. 4, the transceiver unit 1320 is configured to send N pieces of first information to a terminal device on a same time domain resource and N frequency domain resources, where the N frequency domain resources are in a one-to-one correspondence with the N pieces of first information, the first information includes one or more of the following: a synchronization signal and system information, and N is a positive integer greater than 1.

When the communication apparatus 1300 is configured to implement the function of the terminal device in the method embodiment shown in FIG. 4, the transceiver unit 1320 is configured to receive one or more pieces of first information from a network device, where the one or more pieces of first information belong to N pieces of first information. The N pieces of first information correspond to same time domain resources and N frequency domain resources, the N frequency domain resources are in a one-to-one correspondence with the N pieces of first information, N is a positive integer greater than 1, and the first information includes one or more of the following: a synchronization signal and system information.

For more detailed descriptions of the processing unit 1310 and the transceiver unit 1320, directly refer to the related descriptions in the method embodiment shown in FIG. 4. Details are not described herein.

It should be noted that, for implementations and beneficial effects of the modules, refer to corresponding descriptions in the method embodiment shown in FIG. 4.

As shown in FIG. 14, a communication apparatus 1400 includes a processor 1410 and an interface circuit 1420. The processor 1410 and the interface circuit 1420 are coupled to each other. It can be understood that the interface circuit 1420 may be a transceiver or an input/output interface. Optionally, the communication apparatus 1400 may further include a memory 1430, configured to: store instructions to be executed by the processor 1410, store input data required for running instructions by the processor 1410, or store data generated after the processor 1410 runs instructions.

When the communication apparatus 1400 is configured to implement the methods shown in FIG. 4, the processor 1410 is configured to implement functions of the processing unit 1310, and the interface circuit 1420 is configured to implement functions of the transceiver unit 1320.

When the communication apparatus is a chip used in a terminal device, the chip in the terminal device implements functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network.

When the communication apparatus is a module used in a network device, the module in the network device implements a function of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The network device module herein may be a baseband chip of the network device, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor or the like.

The method steps in the embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer programs and instructions. When the computer programs or instructions are loaded and executed on a computer, all or some of the processes or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" refers to one or more, and "a plurality of" refers to two or more. "And/or" describes an association relationship between associated objects, and indicates that three relationships may exist. For example, A and/or B may indicate the following three cases: A exists alone, both A and B exist, and B exists alone, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

**Claims**

1. A communication method, comprising:
   sending N pieces of first information to a terminal device on a same time domain resource and N frequency domain resources, wherein the N frequency domain resources are in a one-to-one correspondence with the N pieces of first information, the N pieces of first information comprise one or more of the following: a synchronization signal and system information, and N is a positive integer greater than 1.

2. The method according to claim 1, wherein the sending N pieces of first information to a terminal device on a same time domain resource and N frequency domain resources comprises:
   sending the N pieces of first information that are same to the terminal device on the same time domain resource and the N frequency domain resources.

3. The method according to claim 2, wherein
   indexes of the N pieces of first information are the same.

4. The method according to any one of claims 1 to 3, wherein the system information comprises a physical broadcast channel PBCH, and the N pieces of first information meet at least one of the following:
   information carried on PBCHs comprised in all of the N pieces of first information is the same; demodulation reference signals DMRSs for PBCHs comprised in all of the N pieces of first information are the same; or beam directions of all of the N pieces of first information are the same.

5. The method according to claim 1, wherein the sending N pieces of first information to a terminal device on a same time domain resource and N frequency domain resources comprises:
   sending the N pieces of first information that are different to the terminal device on the same time domain resource and the N frequency domain resources.

6. The method according to claim 5, wherein
   indexes of the N pieces of first information are different.

7. The method according to claim 5 or 6, wherein the system information comprises a physical broadcast channel PBCH, and the N pieces of first information meet at least one of the following:
   information carried on PBCHs comprised in two of the N pieces of first information is different; DMRSs for PBCHs comprised in two of the N pieces of first information are different; or beam directions of two of the N pieces of first information are different.

8. The method according to any one of claims 1 to 7, wherein
   a spacing between center frequency domain locations of two pieces of first information that are adjacent in the N pieces of first information is an integer multiple of a synchronization raster.

9. The method according to any one of claims 1 to 7, wherein
   a frequency domain location of each of the N pieces of first information is determined based on a frequency domain location of first reference information, and the first reference information belongs to the N pieces of first information.

10. The method according to any one of claims 1 to 9, wherein
    a time-frequency domain resource corresponding to second reference information in the N pieces of first information cannot be used for downlink data transmission, a time-frequency domain resource corresponding to one or more of the N pieces of first information other than the second reference information may be used for downlink data transmission, and the second reference information is one of the N pieces of first information.

11. The method according to any one of claims 1 to 10, wherein

    when time-frequency resources corresponding to R of the N pieces of first information are used for first downlink data transmission, and time-frequency resources corresponding to (N-R) of the N pieces of first information are not used for downlink data transmission, a space domain configuration of the (N-R) pieces of first information and a space domain configuration of the first downlink data transmission are the same, and each are a first spatial domain configuration, wherein R is a positive integer less than or equal to N; and
    when none of time-frequency domain resources corresponding to the N pieces of first information is used for downlink data transmission, a space domain configuration of the N pieces of first information is a second space domain configuration, wherein the first space domain configuration is different from the second space domain configuration.

12. The method according to any one of claims 5 to 11, wherein
S*N*K pieces of first information are sent to the terminal device in S first periods and at N frequency domain locations, K is a quantity of time domain locations in each of the S first periods, N*K pieces of first information that are different are sent in each first period, the N*K pieces of first information in each first period correspond to N*K different indexes, N*K pieces of first information at each of the N frequency domain locations in the S first periods correspond to N*K different indexes, every i frequency domain locations in the N frequency domain locations comprise N*K pieces of first information whose indexes are different in $\lceil S/i \rceil$ first periods, and the first period is duration in which a network device cyclically sends the N*K pieces of first information, wherein S is equal to N, K is a positive integer greater than or equal to 1, S is a positive integer greater than or equal to 1, $\lceil \ \rceil$ represents rounding up, and i is a positive integer greater than or equal to 1.

13. A communication method, comprising:
receiving one or more pieces of first information from a network device, wherein the one or more pieces of first information belong to N pieces of first information, the N pieces of first information correspond to a same time domain resource and N frequency domain resources, the N frequency domain resources are in a one-to-one correspondence with the N pieces of first information, N is a positive integer greater than 1, and the first information comprises one or more of the following: a synchronization signal and system information.

14. The method according to claim 13, wherein the receiving one or more of N pieces of first information from a network device on a same time domain resource and N frequency domain resources comprises:
receiving one or more of the N pieces of first information that are same from the network device on the same time domain resource and the N frequency domain resources.

15. The method according to claim 14, wherein
indexes of the N pieces of first information are the same.

16. The method according to any one of claims 13 to 15, wherein the system information comprises a physical broadcast channel PBCH, and the N pieces of first information meet at least one of the following:
information carried on physical broadcast channels PBCHs comprised in all of the N pieces of first information is the same; demodulation reference signals DMRSs for PBCHs comprised in all of the N pieces of first information are the same; or beam directions of all of the N pieces of first information are the same.

17. The method according to claim 13, wherein the N pieces of first information are N pieces of information that are different, and the receiving one or more of N pieces of first information from a network device on a same time domain resource and N frequency domain resources comprises:
receiving one or more of the N pieces of first information that are different from the network device on the same time domain resource and the N frequency domain resources.

18. The method according to claim 17, wherein
indexes of the N pieces of first information are different.

19. The method according to claim 17 or 18, wherein the system information comprises a physical broadcast channel PBCH, and the N pieces of first information meet at least one of the following:
information carried on PBCHs comprised in two of the N pieces of first information is different; DMRSs for PBCHs comprised in two of the N pieces of first information that are different are different; or beam directions of two of the N pieces of first information are different.

20. The method according to any one of claims 13 to 19, wherein
a spacing between center frequency domain locations of two pieces of first information that are adjacent in the N pieces of first information is an integer multiple of a synchronization raster.

21. The method according to any one of claims 13 to 19, wherein
a frequency domain location of each of the N pieces of first information is determined based on a frequency domain location of first reference information, and the first reference information belongs to the N pieces of first information.

22. The method according to any one of claims 13 to 21, wherein
a time-frequency domain resource corresponding to second reference information in the N pieces of first information cannot be used for downlink data transmission, a time-frequency domain resource corresponding to one or more of the N pieces of first information other than the second reference information may be used for downlink data transmission, and the second reference information is one of the N pieces of first information.

23. The method according to any one of claims 13 to 22, wherein

when time-frequency resources corresponding to R of the N pieces of first information are used for first downlink data transmission, and time-frequency resources corresponding to (N-R) of the N pieces of first information are not used for downlink data transmission, a space domain configuration of the (N-R) pieces of first information and a space domain configuration of the first downlink data transmission are the same, and each are a first spatial domain configuration, wherein R is a positive integer less than or equal to N; and
when none of time-frequency domain resources corresponding to the N pieces of first information is used for downlink data transmission, a space domain configuration of the N pieces of first information is a second space domain configuration, wherein the first space domain configuration is different from the second space domain configuration.

24. The method according to any one of claims 17 to 23, wherein
the N pieces of first information belong to N*K pieces of first information, the N*K pieces of first information are N*K pieces of first information that are different in a first period, minimum duration in which the terminal device can detect the N*K pieces of first information is T, T is determined based on the N*K, a bandwidth of the terminal device, and duration P of the first period, and K is a quantity of time domain locations in each first period.

25. The method according to claim 24, wherein a quantity of pieces of first information that can be detected by the terminal device in the first period within the bandwidth of the terminal device is M, and T, N, K, and M meet the following relationship:

$$T = \lceil (N * K)/M \rceil * P,$$

wherein $\lceil \ \rceil$ represents rounding up.

26. A communication apparatus, comprising: a processing unit and a transceiver unit, wherein the transceiver unit is configured to send N pieces of first information to a terminal device on a same time domain resource and N frequency domain resources, wherein the N frequency domain resources are in a one-to-one correspondence with the N pieces of first information, the first information comprises one or more of the following: a synchronization signal and system information, and N is a positive integer greater than 1.

27. The apparatus according to claim 26, wherein
the transceiver unit is configured to send the N pieces of first information that are same to the terminal device on the same time domain resource and the N frequency domain resources.

28. The apparatus according to claim 27, wherein
indexes of the N pieces of first information are the same.

29. The apparatus according to any one of claims 26 to 28, wherein the system information comprises a physical broadcast channel PBCH, and the N pieces of first information meet at least one of the following:
information carried on PBCHs comprised in all of the N pieces of first information is the same; demodulation reference signals DMRSs for PBCHs comprised in all of the N pieces of first information are the same; or beam directions of all of the N pieces of first information are the same.

30. The apparatus according to claim 26, wherein
the transceiver unit is configured to send the N pieces of first information that are different to the terminal device on the same time domain resource and the N frequency domain resources.

**31.** The apparatus according to claim 30, wherein
indexes of the N pieces of first information are different.

**32.** The apparatus according to claim 30 or 31, wherein the system information comprises a physical broadcast channel PBCH, and the N pieces of first information meet at least one of the following:
information carried on PBCHs comprised in two of the N pieces of first information is different; DMRSs for PBCHs comprised in two of the N pieces of first information are different; or beam directions of two of the N pieces of first information are different.

**33.** The apparatus according to any one of claims 26 to 32, wherein
a spacing between center frequency domain locations of two pieces of first information that are adjacent in the N pieces of first information is an integer multiple of a synchronization raster.

**34.** The apparatus according to any one of claims 26 to 32, wherein
a frequency domain location of each of the N pieces of first information is determined based on a frequency domain location of first reference information, and the first reference information belongs to the N pieces of first information.

**35.** The apparatus according to any one of claims 26 to 34, wherein
a time-frequency domain resource corresponding to second reference information in the N pieces of first information cannot be used for downlink data transmission, a time-frequency domain resource corresponding to one or more of the N pieces of first information other than the second reference information may be used for downlink data transmission, and the second reference information is one of the N pieces of first information.

**36.** The apparatus according to any one of claims 26 to 35, wherein

when time-frequency resources corresponding to R of the N pieces of first information are used for first downlink data transmission, and time-frequency resources corresponding to (N-R) of the N pieces of first information are not used for downlink data transmission, a space domain configuration of the (N-R) pieces of first information and a space domain configuration of the first downlink data transmission are the same, and each are a first spatial domain configuration, wherein R is a positive integer less than or equal to N; and
when none of time-frequency domain resources corresponding to the N pieces of first information is used for downlink data transmission, a space domain configuration of the N pieces of first information is a second space domain configuration, wherein the first space domain configuration is different from the second space domain configuration.

**37.** The apparatus according to any one of claims 30 to 36, wherein
the transceiver unit is configured to send S*N*K pieces of first information to the terminal device in S first periods and at N frequency domain locations, wherein K is a quantity of time domain locations in each of the S first periods, N*K pieces of first information that are different are sent in each first period, the N*K pieces of first information in each first period correspond to N*K different indexes, N*K pieces of first information at each of the N frequency domain locations in the S first periods correspond to N*K different indexes, every i frequency domain locations in the N frequency domain locations comprise N*K pieces of first information whose indexes are different in $\lceil S/i \rceil$ first periods, and the first period is duration in which a network device cyclically sends the N*K pieces of first information, wherein S is equal to N, K is a positive integer greater than or equal to 1, S is a positive integer greater than or equal to 1, $\lceil \ \rceil$ represents rounding up, and i is a positive integer greater than or equal to 1.

**38.** A communication apparatus, comprising: a processing unit and a transceiver unit, wherein
the transceiver unit is configured to receive one or more pieces of first information from a network device, wherein the one or more pieces of first information belong to N pieces of first information, the N pieces of first information correspond to a same time domain resource and N frequency domain resources, the N frequency domain resources are in a one-to-one correspondence with the N pieces of first information, N is a positive integer greater than 1, and the first information comprises one or more of the following: a synchronization signal and system information.

**39.** The apparatus according to claim 38, wherein
the transceiver unit is configured to receive one or more of the N pieces of first information that are same from the network device on the same time domain resource and the N frequency domain resources.

40. The apparatus according to claim 39, wherein
indexes of the N pieces of first information are the same.

41. The apparatus according to any one of claims 38 to 40, wherein the system information comprises a physical broadcast channel PBCH, and the N pieces of first information meet at least one of the following:
information carried on physical broadcast channels PBCHs comprised in all of the N pieces of first information is the same; demodulation reference signals DMRSs for PBCHs comprised in all of the N pieces of first information are the same; or beam directions of all of the N pieces of first information are the same.

42. The apparatus according to claim 38, wherein
the transceiver unit is configured to receive one or more of the N pieces of first information that are different from the network device on the same time domain resource and the N frequency domain resources.

43. The apparatus according to claim 42, wherein
indexes of the N pieces of first information are different.

44. The apparatus according to claim 42 or 43, wherein the system information comprises a physical broadcast channel PBCH, and the N pieces of first information meet at least one of the following:
information carried on PBCHs comprised in two of the N pieces of first information is different; DMRSs for PBCHs comprised in two of the N pieces of first information that are different are different; or beam directions of two of the N pieces of first information are different.

45. The apparatus according to any one of claims 38 to 44, wherein
a spacing between center frequency domain locations of two pieces of first information that are adjacent in the N pieces of first information is an integer multiple of a synchronization raster.

46. The apparatus according to any one of claims 38 to 44, wherein
a frequency domain location of each of the N pieces of first information is determined based on a frequency domain location of first reference information, and the first reference information belongs to the N pieces of first information.

47. The apparatus according to any one of claims 38 to 46, wherein
a time-frequency domain resource corresponding to second reference information in the N pieces of first information cannot be used for downlink data transmission, a time-frequency domain resource corresponding to one or more of the N pieces of first information other than the second reference information may be used for downlink data transmission, and the second reference information is one of the N pieces of first information.

48. The apparatus according to any one of claims 38 to 47, wherein

when time-frequency resources corresponding to R of the N pieces of first information are used for first downlink data transmission, and time-frequency resources corresponding to (N-R) of the N pieces of first information are not used for downlink data transmission, a space domain configuration of the (N-R) pieces of first information and a space domain configuration of the first downlink data transmission are the same, and each are a first spatial domain configuration, wherein R is a positive integer less than or equal to N; and
when none of time-frequency domain resources corresponding to the N pieces of first information is used for downlink data transmission, a space domain configuration of the N pieces of first information is a second space domain configuration, wherein the first space domain configuration is different from the second space domain configuration.

49. The apparatus according to any one of claims 42 to 48, wherein
the N pieces of first information belong to N*K pieces of first information, the N*K pieces of first information are N*K pieces of first information that are different in a first period, minimum duration in which the terminal device can detect the N*K pieces of first information is T, T is determined based on the N*K, a bandwidth of the terminal device, and duration P of the first period, and K is a quantity of time domain locations in each first period.

50. The apparatus according to claim 49, wherein
a quantity of pieces of first information that can be detected by the terminal device in the first period within the bandwidth of the terminal device is M, and T, N, K, and M meet the following relationship:

$$T = \lceil (N * K)/M \rceil * P,$$

wherein $\lceil \ \rceil$ represents rounding up.

51. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 12 by using a logic circuit or executing code instructions.

52. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 13 to 25 by using a logic circuit or executing code instructions.

53. A computer-readable storage medium, wherein the computer-readable storage medium stores computer program instructions, and when the computer program instructions are executed by a communication apparatus, the method according to any one of claims 1 to 12 or the method according to any one of claims 13 to 25 is implemented.

54. A computer program product, wherein the computer program product comprises computer program instructions, and when the computer program instructions are executed by a communication apparatus, the method according to any one of claims 1 to 12 or the method according to any one of claims 13 to 25 is implemented.

55. A communication system, comprising at least one communication apparatus according to claim 51 and at least one communication apparatus according to claim 52.

FIG. 1

EP 4 443 985 A1

FIG. 2

FIG. 3

```
┌──────────────────┐                              ┌──────────────────┐
│  Network device  │                              │  Terminal device │
└──────────────────┘                              └──────────────────┘
          │                                                 │
          │   S401: Send N pieces of first information on a │
          │   same time domain resource and N frequency     │
          │            domain resources                     │
          │ ───────────────────────────────────────────────▶│
          │                                                 │
          │                          ┌──────────────────────┴──────────────┐
          │                          │ S402: Receive one or more pieces of first │
          │                          │              information              │
          │                          └──────────────────────┬──────────────┘
          │                                                 │
          │      S403: Send a random access channel RACH    │
          │ ◀───────────────────────────────────────────────│
          │                                                 │
┌─────────┴──────────────────────────────┐                 │
│ S404: Receive the random access channel │                 │
│                RACH                     │                 │
└─────────┬───────────────────────────────┘                │
          │                                                 │
```

FIG. 4

Frequency
domain

Fourth frequency
domain resource

Third frequency
domain resource

Second frequency
domain resource

First frequency
domain resource

Time domain

(a)

Frequency
domain

Fourth frequency
domain resource

Third frequency
domain resource

Second frequency
domain resource

First frequency
domain resource

Time domain

(b)

FIG. 5

Center frequency domain location of first information
One synchronization raster
Center frequency domain location of first information

FIG. 6

Center frequency domain location of first reference information

FIG. 7

Time-frequency domain resources corresponding to first information whose indexes are 0, 1, and 3 may be used for downlink data transmission

A time-frequency domain resource corresponding to second reference information cannot be used for downlink data transmission

FIG. 8

FIG. 9

FIG. 10

EP 4 443 985 A1

FIG. 11

EP 4 443 985 A1

FIG. 12

Communication apparatus 1300

Processing unit 1310

Transceiver unit 1320

FIG. 13

Communication apparatus 1400

Processor 1410

Interface circuit 1420

Memory 1430

FIG. 14

## INTERNATIONAL SEARCH REPORT

International application No.

**PCT/CN2022/139869**

### A. CLASSIFICATION OF SUBJECT MATTER

H04W 52/02(2009.01)i

According to International Patent Classification (IPC) or to both national classification and IPC

### B. FIELDS SEARCHED

Minimum documentation searched (classification system followed by classification symbols)

IPC: H04W H04Q,H04L

Documentation searched other than minimum documentation to the extent that such documents are included in the fields searched

Electronic data base consulted during the international search (name of data base and, where practicable, search terms used)

CNPAT, CNKI, EPODOC, WPI, 3GPP: 时域, 频域, 子载波, 时隙, 同步信号, 系统信息, PSS, SSS, PBCH, 频分复用, time domain, frequency domain, slot

### C. DOCUMENTS CONSIDERED TO BE RELEVANT

| Category* | Citation of document, with indication, where appropriate, of the relevant passages | Relevant to claim No. |
|---|---|---|
| X | WO 2021134693 A1 (HUAWEI TECHNOLOGIES CO., LTD.) 08 July 2021 (2021-07-08) description, page 12, the thirteenth-from-last line-page 23, line 21, page 25, line 8-page 26, the last line, and figures 1-7 | 1-55 |
| A | CN 110972285 A (HUAWEI TECHNOLOGIES CO., LTD.) 07 April 2020 (2020-04-07) entire document | 1-55 |
| A | CN 111867038 A (HUAWEI TECHNOLOGIES CO., LTD.) 30 October 2020 (2020-10-30) entire document | 1-55 |
| A | WO 2021184354 A1 (GUANGDONG OPPO MOBILE TELECOMMUNICATIONS CORP., LTD.) 23 September 2021 (2021-09-23) entire document | 1-55 |
| A | HUAWEI et al. "Discussion on Resource Allocation and Indication for Data Channel" *3GPP TSG RAN WG1 NR Ad-Hoc Meeting R1-1700029*, 20 January 2017 (2017-01-20), entire document | 1-55 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 February 2023** | **20 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/139869**

| Patent document cited in search report | | | Publication date (day/month/year) | Patent family member(s) | | | Publication date (day/month/year) |
|---|---|---|---|---|---|---|---|
| WO | 2021134693 | A1 | 08 July 2021 | EP | 4072214 | A1 | 12 October 2022 |
| | | | | US | 2022338140 | A1 | 20 October 2022 |
| | | | | CN | 114846871 | A | 02 August 2022 |
| CN | 110972285 | A | 07 April 2020 | None | | | |
| CN | 111867038 | A | 30 October 2020 | WO | 2020216130 | A1 | 29 October 2020 |
| WO | 2021184354 | A1 | 23 September 2021 | CN | 114982356 | A | 30 August 2022 |

Form PCT/ISA/210 (patent family annex) (July 2022)

**REFERENCES CITED IN THE DESCRIPTION**

**Patent documents cited in the description**

- CN 202111667040